(19) Europäisches Patentamt
European Patent Office
Office européen des brevets

(11) Veröffentlichungsnummer : **0 507 822 B1**

(12) # EUROPÄISCHE PATENTSCHRIFT

(45) Veröffentlichungstag der Patentschrift :
**22.06.94 Patentblatt 94/25**

(51) Int. Cl.$^5$ : **C09B 62/08,** C09B 62/24

(21) Anmeldenummer : **91901741.8**

(22) Anmeldetag : **17.12.90**

(86) Internationale Anmeldenummer :
**PCT/EP90/02200**

(87) Internationale Veröffentlichungsnummer :
**WO 91/09913 11.07.91 Gazette 91/15**

(54) **AZOVERBINDUNGEN, VERFAHREN ZU DEREN HERSTELLUNG UND IHRE VERWENDUNG ALS FARBSTOFFE.**

(30) Priorität : **29.12.89 DE 3943286**

(43) Veröffentlichungstag der Anmeldung :
**14.10.92 Patentblatt 92/42**

(45) Bekanntmachung des Hinweises auf die Patenterteilung :
**22.06.94 Patentblatt 94/25**

(84) Benannte Vertragsstaaten :
**BE CH DE FR GB IT LI**

(56) Entgegenhaltungen :
**EP-A- 0 073 178**

(56) Entgegenhaltungen :
**EP-A- 0 324 373**
**CH-A- 510 728**
**GB-A- 2 003 911**
**GB-A- 2 103 232**

(73) Patentinhaber : **HOECHST AKTIENGESELLSCHAFT**
**D-65926 Frankfurt (DE)**

(72) Erfinder : **SPRINGER, Hartmut**
**Am Erdbeerstrein 27**
**D-6240 Königstein/Taunus (DE)**
Erfinder : **HUSSONG, Kurt**
**Am Flachsland 56**
**D-6233 Kelkheim (Taunus) (DE)**

**EP 0 507 822 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung liegt auf dem technischen Gebiet der faserreaktiven Azofarbstoffe.

Faserreaktive Azofarbstoffe mit einem Di- oder Trisulfonaphthylamin als Diazokomponente und mit einem faserreaktiven Rest aus der heterocyclischen Reihe sind zahlreich bekannt, beispielsweise aus den US-Patentschriften 2 951 070, 3 216 826 und 4 122 079, der deutschen Auslegeschrift 1 135 592, den britischen Patentschriften 1 165 661 und 1 169 254 und der britischen Patentanmeldungs-Veröffentlichung Nr. 2 057 479A. Die steigenden Anforderungen an die Qualität, die Wirtschaftlichkeit und die Brillanz der Färbungen haben es erforderlich gemacht, neue Azofarbstoffe zu entwickeln, die diesbezüglich verbesserte Eigenschaften besitzen und zudem anwendungstechnisch einfach zu handhaben sind.

Mit der vorliegenden Erfindung wurden nunmehr neue Azoverbindungen gefunden, die der allgemeinen Formel (1)

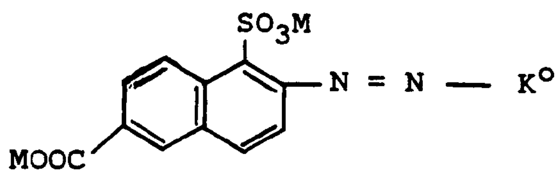

(1)

entsprechen. In dieser Formel bedeuten:

M ist ein Wasserstoffatom oder salzbildendes Metallatom, wie insbesondere ein Alkalimetallatom, wie Natrium, Kalium oder Lithium;

K° ist ein Rest der allgemeinen Formel (2A) oder (2B)

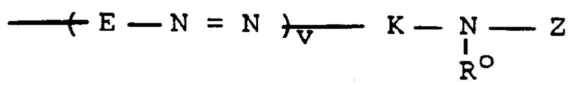

(2A)

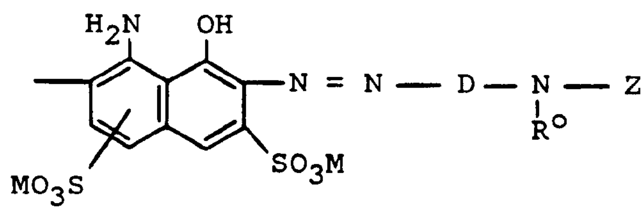

(2B)

in welchen

M die obengenannte Bedeutung besitzt,

R° Wasserstoff oder Alkyl von 1 bis 4 C-Atomen, wie Methyl oder Ethyl, ist oder Alkyl von 1 bis 4 C-Atomen, wie beispielsweise Ethyl ist, das durch Sulfo, Carboxy, Sulfato, Phosphato, Hydroxy, Methoxy, Ethoxy, Phenyl, Monosulfophenyl oder Disulfophenyl substituiert ist, bevorzugt Wasserstoff ist,

Z ein einen alkalisch abspaltbaren Substituenten enthaltender faserreaktiver Rest der Pyrimidin- oder Triazinreihe ist,

D einen Rest der allgemeinen Formel (3)

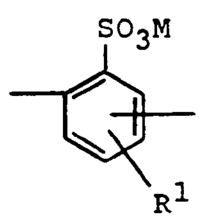

(3)

bedeutet, in welcher

M eine der obengenannten Bedeutungen hat und

$R^1$ Wasserstoff oder Alkyl von 1 bis 4 C-Atomen, wie Ethyl und insbesondere Methyl, ist,

E ein Rest der allgemeinen Formel (4a), (4b), (4c) oder (4d)

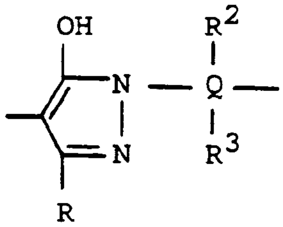 (4a) 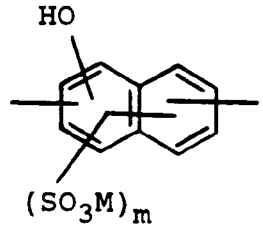 (4b)

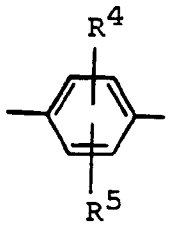 (4c) 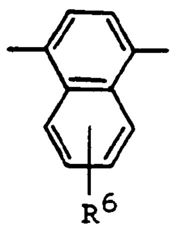 (4d)

ist, in welchen

R Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl ist, bevorzugt Methyl, Carboxy, Cyano, Carbomethoxy oder Carbethoxy ist,

Q ein Benzol- oder Naphthalinrest ist,

$R^2$ Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Fluor, Brom, Chlor, Sulfo, Carboxy, Carbalkoxy von 2 bis 5 C-Atomen, wie Carbomethoxy und Carbethoxy, Trifluormethyl, Carbamoyl oder N-($C_1$-$C_4$-Alkyl)-carbamoyl, bevorzugt Wasserstoff, Methoxy, Ethoxy, Methyl oder Chlor, ist, falls Q einen Benzolring bedeutet, oder

$R^2$ Wasserstoff oder Sulfo ist, falls Q einen Naphthalinring bedeutet,

$R^3$ Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Chlor oder Sulfo, bevorzugt Wasserstoff, Methoxy, Ethoxy oder Methyl, ist, falls Q einen Benzolrest bedeutet, oder Wasserstoff oder Sulfo ist, falls Q einen Naphthalinrest bedeutet,

$R^4$ Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Brom, Chlor, Trifluormethyl, Sulfo, Carboxy oder Cyano, bevorzugt Wasserstoff, Methyl, Methoxy oder Sulfo, ist,

$R^5$ Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Chlor, Amino, Alkylamino von 1 bis 4 C-Atomen, wie Ethylamino, Alkanoylamino von 2 bis 5 C-Atomen, wie Acetylamino und Propionylamino, Benzoylamino, Ureido, N'-Phenylureido, N'-($C_1$-$C_4$-Alkyl)-ureido, Phenylsulfonyl oder Alkylsulfonyl von 1 bis 4 C-Atomen, wie Ethylsulfonyl und Methylsulfonyl, und bevorzugt Acetylamino, Methyl, Ureido oder Wasserstoff ist,

$R^6$ Wasserstoff oder Sulfo ist,

M eine der obengenannten Bedeutungen hat,

m die Zahl 1 oder 2 bedeutet,

v die Zahl Null oder 1 ist und -K-N($R^o$)- ein Rest der allgemeinen Formel (5a), (5b), (5c), (5d), (5e), (5f), (5g), (5h) oder (5i)

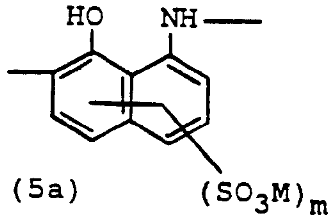
(5a)

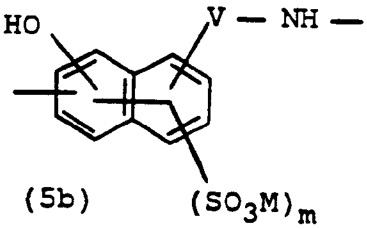
(5b)

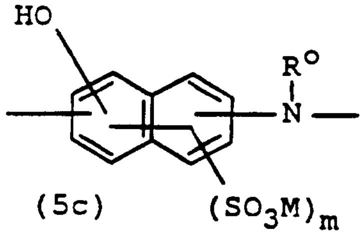
(5c)

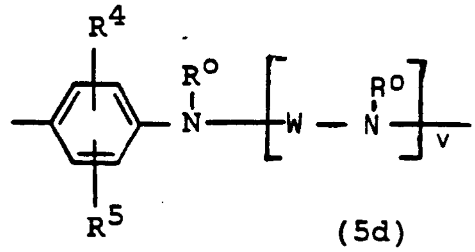
(5d)

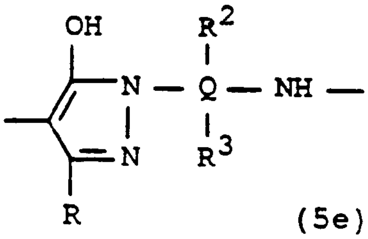
(5e)

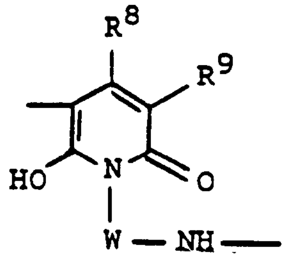
(5f)

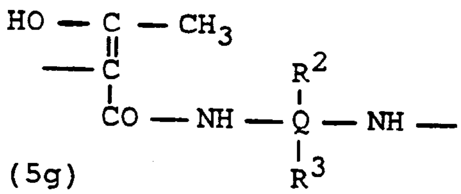
(5g)

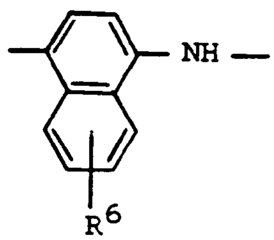
(5h)

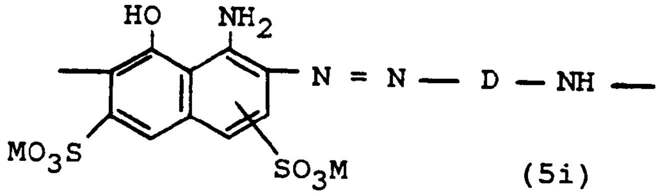
(5i)

ist, in welchen

M, m, Q, D, R, $R^o$, $R^1$, $R^2$, $R^3$, $R^4$, $R^5$, $R^6$ und v eine der obengenannten Bedeutungen besitzen,

V eine direkte, kovalente Bindung oder ein Rest der Formel -NH-CO-phenylen- , -NH-CO-NH-phenylen- , -N($CH_3$)-CO-phenylen- , -N($CH_3$)-CO-NH-phenylen- oder -NH-phenylen- ist,

W ein Phenylenrest ist, der durch 1 oder 2 Substituenten aus der Gruppe Alkyl von 1 bis 4 C-Atomen, wie Ethyl und insbesondere Methyl, Alkoxy von 1 bis 4 C-Atomen, wie Ethoxy und insbesondere Methoxy, Chlor, Carboxy und Sulfo substituiert sein kann, oder ein Alkylen von 1 bis 6 C-Atomen, bevorzugt von 1 bis 4 C-Atomen, wie beispielsweise Ethylen, ist oder ein Alkylen-phenylen mit einem Alkylen von 2 bis 4 C-Atomen ist, wie beispielsweise der Methylen-phenylen- oder Ethylen-phenylen-Rest ist,

$R^8$ Wasserstoff, Alkyl von 1 bis 4 C-Atomen, wie Methyl, Alkoxy von 1 bis 4 C-Atomen, wie Methoxy, Phenyl

oder durch Cyano substituiertes Alkyl von 1 bis 4 C-Atomen ist und

$R^9$ Wasserstoff, Sulfo, Sulfoalkyl von 1 bis 4 C-Atomen, wie Sulfomethyl, Cyano oder Carbamoyl ist.

Der Formelrest E ist als der Rest einer kupplungsfähigen und diazotierbaren Verbindung entsprechend der allgemeinen Formel $H\text{-}E\text{-}NH_2$ aufzufassen.

In den Formeln (4b), (5b) und (5c) stehen jeweils die Hydroxygruppe und die freie Bindung im selben aromatischen Kern in ortho-Stellung zueinander. Bevorzugt steht die Hydroxygruppe in $\alpha$-Stellung an den Naphthalinrest gebunden.

Die vorstehend oder nachfolgend bezeichneten Gruppen "Sulfo", "Carboxy", "Phosphato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel $-COOM$ , Phosphatogruppen Gruppen entsprechend der allgemeinen Formel $-OPO_3M_2$ und Sulfatogruppen entsprechend Gruppen der allgemeinen Formel $-OSO_3M$ , jeweils mit M der obengenannten Bedeutung.

Faserreaktive Pyrimidinreste Z, die mindestens einen alkalisch eliminierbaren Substituenten enthalten, der vorzugsweise ein Chlor- und insbesondere ein Fluoratom ist, sind beispielsweise der 2-Fluor-4-pyrimidinyl-, 6-Fluor-2,5-dichlor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methyl-sulfonyl-4-pyrimidinyl-, 2-Fluor-4-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-cyano-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl-, 6-Fluor-5-chlor-4-pyrimidinyl-, 6-Fluor-5-trifluormethyl-4-pyrimidinyl-, 6-Fluor-2-methyl-4-pyrimidinyl-, 6-Fluor-5-chlor-2-methyl-4-pyrimidinyl-, 5,6-Difluorpyrimidinyl-, 6-Fluor-5-chlor-2-trifluormethyl-4-pyrimidinyl-, 6-Fluor-2-phenyl-4-pyrimidinyl-, 6-Fluor-5-cyan-4-pyrimidinyl-, 6-Fluor-5-nitro-4-pyrimidinyl-, 6-Fluor-5-methylsulfonyl-4-pyrimidinyl- und 6-Fluor-5-phenyl-sulfonyl-4-pyrimidinyl-Rest.

Bevorzugt hiervon sind der 2,6-Difluor-5-chlor-pyrimidin-4-yl-, der 2-Fluor-5,6-dichlor-pyrimidin-4-yl- und der 2,5-Dichlor-6-fluor-pyrimidin-4-yl-Rest.

Faserreaktive Reste Z der Triazinreihe sind insbesondere der 2,4-Dichlor-1,3,5-triazin-6-yl-Rest sowie Reste, die der allgemeinen Formel (6)

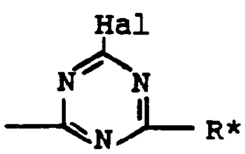

(6)

entsprechen, in welcher

Hal ein Halogenatom, bevorzugt ein Chlor- oder Fluoratom, und

R* eine Alkoxygruppe von 1 bis 4 C-Atomen, wie die Methoxy- oder Ethoxygruppe, oder eine Phenoxygruppe ist, die durch 1 oder 2 Substituenten aus der Gruppe Methyl, Ethyl, Methoxy, Ethoxy, Chlor, Sulfo und Carboxy substituiert sein kann, oder bevorzugt eine Aminogruppe der allgemeinen Formel (7)

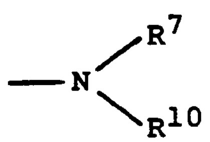

(7)

ist, in welcher

$R^7$ Wasserstoff oder Alkyl von 1 bis 4 C-Atomen, wie Methyl oder Ethyl, ist oder Alkyl von 1 bis

4 C-Atomen, wie beispielsweise Ethyl ist, das durch Sulfo, Carboxy, Sulfato, Phosphato, Hydroxy, Methoxy, Ethoxy, Phenyl, Monosulfophenyl oder Disulfophenyl substituiert ist,

$R^{10}$ Wasserstoff, Alkyl von 1 bis 4 C-Atomen, wie Methyl oder Ethyl, ist oder Alkyl von 1 bis 4 C-Atomen, wie beispielsweise Ethyl, ist, das durch Sulfo, Carboxy, Sulfato, Phosphato, Hydroxy, Methoxy, Ethoxy, Phenyl, Monosulfophenyl oder Disulfophenyl substituiert ist, oder ein Cycloalkylen von 5 oder 6 C-Atomen ist, das durch 1, 2 oder 3 Methylgruppen substituiert sein kann, oder ein Phenylrest ist, der durch 1 oder 2 Substituenten aus der Gruppe Methyl, Ethyl, Methoxy, Ethoxy, Chlor, Sulfo und Carboxy substituiert sein kann, oder

$R^7$ und $R^{10}$ zusammen mit dem N-Atom einen 5- oder 6-gliedrigen heterocyclischen Rest bilden, der eine oder zwei weitere Heteroatome und/oder Heterogruppen, wie ein Sauerstoff-, Schwefel- oder Stickstoffatom oder eine Gruppe -NH- , enthalten kann, wie beispielsweise den Piperidino-, Piperazino- oder Morpholino-Rest.

Bevorzugt ist R* eine Aminogruppe der allgemeinen Formel (7), in welcher $R^7$ Wasserstoff, Methyl oder Ethyl ist und $R^{10}$ ein Phenylrest ist, der durch 1 oder 2 Sulfogruppen substituiert ist.

Bevorzugte Azoverbindungen der allgemeinen Formel (1) mit dem Rest K° gleich der allgemeinen Formel (2A) sind insbesondere solche, in denen der Rest K° einen Rest der allgemeinen Formel (9a), (9b), (9c), (9d), (9e) oder (9f)

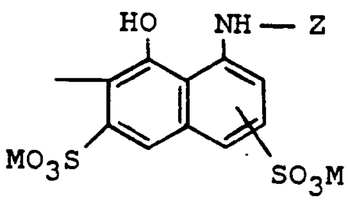
(9a)

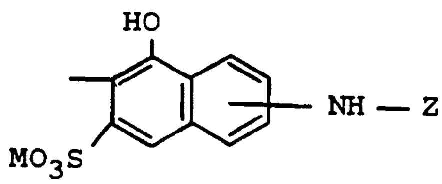
(9b)

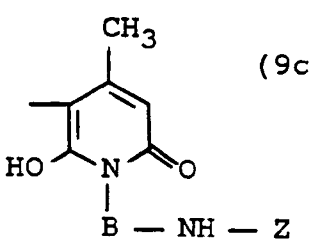
(9c)

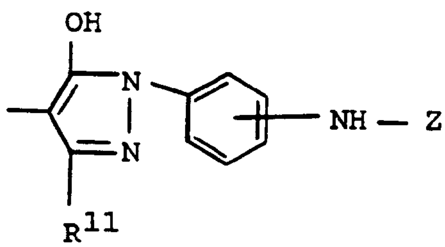
(9d)

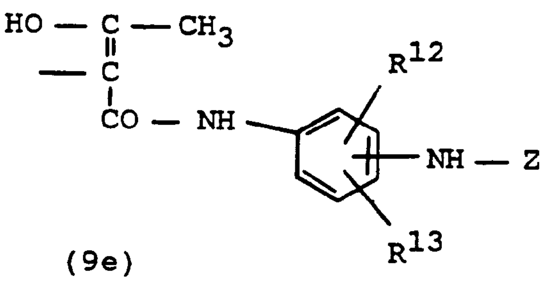
(9e)

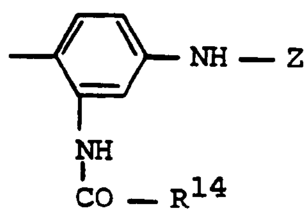
(9f)

bedeutet, in welchen

M und Z eine der obengenannten Bedeutungen, insbesondere bevorzugten Bedeutungen, haben,
B Alkylen von 2 bis 4 C-Atomen oder Phenylen ist,
$R^{11}$ Carboxy, Methyl oder Carbethoxy ist,
$R^{12}$ Wasserstoff, Methyl, Methoxy, Sulfo oder Chlor ist,
$R^{13}$ Wasserstoff, Methyl oder Methoxy ist und
$R^{14}$ Methyl oder Amino ist.

Die vorliegende Erfindung betrifft weiterhin Verfahren zur Herstellung der erfindungsgemäßen Azoverbindungen der allgemeinen Formel (1), die dadurch gekennzeichnet sind, daß man im Falle, daß K° einen Rest der allgemeinen Formel (2A) bedeutet, die Diazoniumverbindung eines Amins der allgemeinen Formel (10)

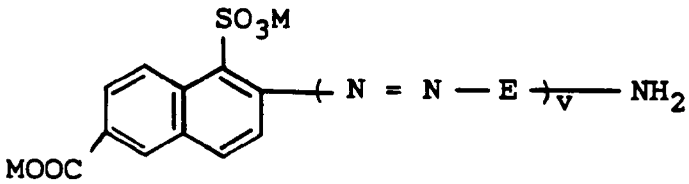

(10)

in welcher M, E und v die obengenannten Bedeutungen haben, mit einer Verbindung der allgemeinen Formel H-K-N(R°)-Z mit K, R° und Z der obengenannten Bedeutung kuppelt, oder daß man eine Verbindung der allgemeinen Formel (11)

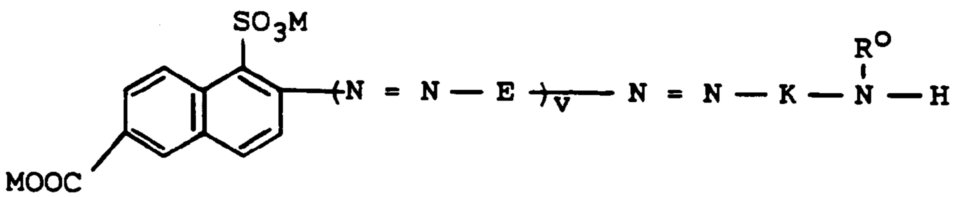

(11)

in welcher M, E, v, R° und K die obengenannten Bedeutungen haben, mit einer Verbindung der allgemeinen Formel Hal-Z mit Hal und Z der obengenannten Bedeutung umsetzt, oder daß man zur Herstellung einer Verbindung (1), die als Rest Z einen faserreaktiven Rest der Formel (6) besitzt, eine Verbindung der allgemeinen Formel (12)

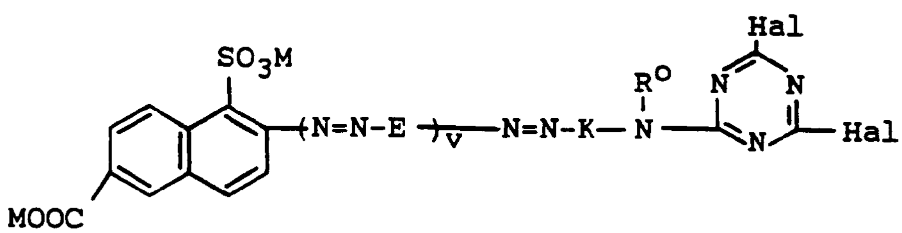

(12)

in welcher M, E, v, R° und K eine der obengenannten Bedeutungen haben und Hal wie oben definiert ist, bevorzugt beide Hal Chlor bedeuten, mit einer Verbindung der allgemeinen Formel H-R* mit R* der obengenannten Bedeutung in äquivalenten Mengen umsetzt,
und daß man im Falle von K° gleich einem Rest der allgemeinen Formel (2B) eine Verbindung der allgemeinen Formel (13)

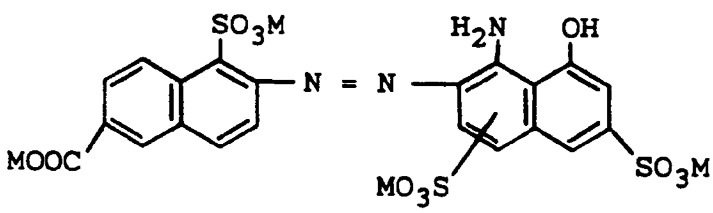

(13)

in welcher M die obengenannte Bedeutung besitzt, mit der Diazoniumverbindung eines Amins der allgemeinen Formel (14)

$H_2N$-D-N(R°)-Z (14)

in welcher D, R° und Z die obengenannte Bedeutung haben, kuppelt, oder daß man eine Verbindung der allgemeinen Formel (15)

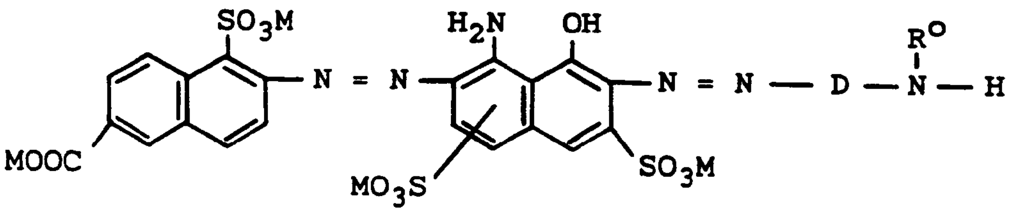

(15)

in welcher D, R° und M die obengenannten Bedeutungen haben, mit einer Verbindung der allgemeinen Formel Hal-Z mit Hal und Z der obengenannten Bedeutung umsetzt, oder daß man eine Verbindung der allgemeinen Formel (16)

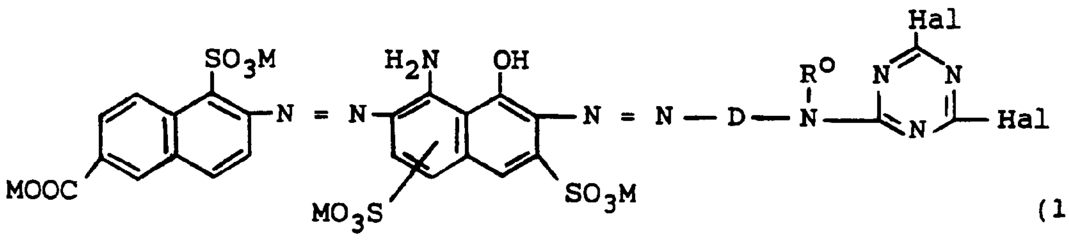

(16)

in welcher D, R° und M die obengenannten Bedeutungen haben und Hal wie oben definiert ist, bevorzugt beide Hal Chlor bedeuten, mit einer Verbindung der allgemeinen Formel H-R* mit R* der obengenannten Bedeutung in äquivalenten Mengen umsetzt.

Die Diazotierungs- und Kupplungsreaktionen des erfindungsgemäßen Verfahrens erfolgen in üblicher und altbekannter Weise, so die Diazotierung in der Regel bei einer Temperatur zwischen -5°C und +15°C und einem pH-Wert unterhalb von 2 mittels einer starken Säure und Alkalinitrit in bevorzugt wäßrigem Medium und die Kupplungsreaktion in der Regel bei einer Temperatur zwischen 0 und 30°C und bei einem pH-Wert zwischen 1 und 4,5 im Falle einer aminogruppenhaltigen Kupplungskomponente und bei einem pH-Wert zwischen 3 und 7,5 im Falle einer hydroxygruppenhaltigen Kupplungskomponente in bevorzugt wäßrigem Medium.

Die Ausgangsverbindungen der allgemeinen Formel (10) mit v gleich 1 werden aus dem 1-Sulfo-6-carboxy-2-amino-naphthalin als Diazokomponente und der Verbindung der allgemeinen Formel $H-E-NH_2$ als Kupplungskomponente in bekannter Weise der Diazotierungs- und Kupplungsreaktionen hergestellt. In gleicher Weise erfolgt die Synthese der Azoverbindungen der allgemeinen Formel (13) durch Kupplung des Diazoniumsalzes des 1-Sulfo-6-carboxy-2-aminonaphthalins mit der 1-Amino-8-naphthol-3,6- oder -4,6-disulfonsäure analog bekannter Verfahrensweisen im stark sauren Medium.

Die Ausgangsverbindungen entsprechend der allgemeinen Formel $H_2N-D-N(R^o)H$ , der allgemeinen Formel $H-K-N(R^o)H$ , der allgemeinen Formel $H-E-NH_2$ und der allgemeinen Formel H-R* sind bekannt und zahlreich in der Literatur beschrieben. Ausgangsverbindungen der allgemeinen Formel $H-E-NH_2$ sind beispielsweise Anilin, 3-Methyl-anilin, 3-Chlor-anilin, 2,5-Dimethyl-anilin, 2,5-Dimethoxy-anilin, 3-Methoxy-anilin, 3-Methyl-6-methoxy-anilin, 3-Ureido-anilin, 3-Acetylamino-6-methyl-anilin, 2-Amino-4-acetylamino-benzol-1-sulfonsäure, 1-Aminonaphthalin, 1-Aminonaphthalin-6- oder -7- oder -8-sulfonsäure, 3-Acetylamino-anilin, 2-Methyl-anilin, 2-Methoxy-anilin, 3-Benzoylamino-anilin, 2,3-Dimethyl-anilin, 3,5-Dimethyl-anilin, 2-Methoxy-5-acetylamino-anilin, 2-Chlor-6-methyl-anilin, 5-Chlor-2-methyl-anilin, 2,6-Dichlor-3-methyl-anilin und 2-Methoxy-5-methyl-anilin.

Kupplungskomponenten entsprechend der allgemeinen Formel $H-K-N(R^o)-Z$ sind beispielsweise 1-(4′,6′-Dichlor-1′,3′,5′-triazin-2′-yl)-amino-8-naphthol-4,6- oder -3,6-disulfonsäure, 2- oder 3-(4′,6′-Dichlor-s-triazin-2′-yl)-amino-8-naphthol-6-sulfonsäure, 1-(2′,4′-Difluor-5-chlor-pyrimidin-6′-yl)-amino-8-naphthol-3,6-oder -4,6-disulfonsäure, 2- oder 3-(2′,4′-Difluor-5′-chlor-pyrimidin-6′-yl)-amino-8-naphthol-6-sulfonsäure, 1-(2′-Fluor-4′,5′-dichlor-pyrimidin-6′-yl)-amino-8-naphthol-3,6- oder -4,6-disulfonsäure, 2- oder 3-(2′-Fluor-4′,5′-dichlor-pyrimidin-6′-yl)-amino-8-naphthol-6-sulfonsäure, 1-(2′,5′-Dichlor-5′-fluor-pyrimidin-6′-yl)-amino-8-naphthol-3,6- oder -4,6-disulfonsäure, 2- oder 3-(2′,5′-Dichlor-5′-fluor-pyrimidin-6′-yl)-amino-8-naphthol-6-sulfonsäure, 1-[2′-Fluor-4′-(4″-sulfophenylamino)-s-triazin-6′-yl]-amino-8-naphthol-6-sulfonsäure, 1-[2′-Fluor-4′-(β-sulfoethylamino)-s-triazin-6′-yl]-amino-8-naphthol-6-sulfonsäure, 2-[2′-Sulfo-5′-(4″,6″-dichlor-s-triazin-2″-yl)-amino-phenylazo]-1-amino-8-naphthol-3,6-disulfonsäure, 2-[2′-Sulfo-4′-(4″,6″-dichlor-s-triazin-2″-yl)-amino-phenylazo]-1-amino-8-naphthol-3,6-disulfonsäure, 2-[2′-Sulfo-5′-(2″,5″-dichlor-4″-fluor-pyrimidin-6″-yl)-aminophenylazo]-1-amino-8-naphthol-3,6-disulfonsäure, 2-[2′-Sulfo-5′-(2″-fluor-4″,5″-dichlor-pyrimidin-6″-yl)-aminophenylazo]-1-amino-8-naphthol-3,6-disulfonsäure, 2-[2′-Sulfo-5′-(2″,4″-difluor-5″-chlor-pyrimidin-6″-yl)-aminophenylazo]-1-amino-8-naphthol-3,6-disulfonsäure, 1-[4′-(4″,6″-Dichlor-s-triazin-2″-yl)-amino]-phenyl-3-methyl- oder -3-carboxy-5-pyrazolon, 1-[4′-(2″ ,5″-Dichlor-4″-fluorpyrimidin-6″-yl)-amino]-phenyl-3-methyl- oder 3-carboxy-5-pyrazolon, 1-[4′-(2″-Fluor-4″,5″-dichlor-pyrimidin-6″-yl)-amino]-phenyl-3-methyl- oder -3-carboxy-5-pyrazolon, 1-[4′-(2″,4″,-Difluor-5″-chlor-pyrimidin-6″-yl)-amino]-phenyl-3-methyl-oder -3-carboxy-5-pyrazolon und 4-Methyl-1-[β-(4′,6′-dichlor-s-triazin-2′-yl)-amino-ethyl]-6-hydroxy-2-pyridon.

Ausgangsverbindungen der allgemeinen Formel H-K-N(R°)H sind beispielsweise 1-(3′- oder 4′-Aminophenyl)-3-carboxy-5-pyrazolon, 1-(2′-Sulfo-5′-aminophenyl)-3-carboxy-5-pyrazolon, 1-(2′-Methoxy-5′-aminophenyl)-3-carboxy-5-pyrazolon, 1-(3′- oder 4′-Aminophenyl)-3-methyl-5-pyrazolon, 1-(6′-Amino-4′,8′-disulfonaphth-2′-yl)-3-carboxy-5-pyrazolon, 1-Amino-3,6- oder -4,6-disulfo-8-naphthol, 7-Amino-3-sulfo-1-naphthol, 6-Amino-3-sulfo-1-naphthol, 6-Amino-3,5-disulfo-1-naphthol, 3-Methyl-anilin, 3-Chlor-anilin, 2,5-Dimethyl-anilin, 2,5-Dimethoxy-anilin, Anilin, 3-Methoxy-anilin, 3-Methyl-6-methoxy-anilin, 3-Ureido-anilin, 3-Acetylamino-6-methyl-anilin, 2-Amino-4-acetylamino-benzol-1-sulfonsäure, 1-Aminonaphthalin, 1-Aminonaphthalin-6- oder -7- oder -8-sulfonsäure, 3-Acetylamino-anilin, 2-Methyl-anilin, 2-Methoxy-anilin, 3-Benzoylamino-anilin, 2,3-Dimethyl-anilin, 3,5-Dimethyl-anilin, 2-Methoxy-5-acetylamino-anilin, 2-Chlor-6-methyl-anilin, 5-Chlor-2-methyl-anilin, 2,6-Dichlor-3-methyl-anilin und 2-Methoxy-5-methyl-anilin.

Die Kondensationsreaktionen zwischen einer Amino- Ausgangsverbindung der allgemeinen Formel (11) oder (15) und einer Verbindung der allgemeinen Formel Hal-Z erfolgen in üblicher Weise der Umsetzung einer Aminoverbindung mit einem ein reaktives Halogenatom enthaltenden heterocyclischen Rest, wie im vorliegenden Falle einem halogensubstituierten Pyrimidin oder Triazin, in wäßrig-organischem Medium, bevorzugt in wäßrigem Medium, und bevorzugt in Anwesenheit eines Dispergiermittels unter Zusatz eines säurebindenden Mittels, wie eines Alkali- oder Erdalkalicarbonats, Alkali- oder Erdalkalihydrogencarbonats oder -hydroxids oder Alkaliacetats, wobei die Alkali- und Erdalkalimetalle vorzugsweise Natrium, Kalium oder Calcium sind, oder eines tertiären Amins, wie beispielsweise Pyridin, Triethylamin oder Chinolin. Sofern diese Kondensationsreaktionen in organischem oder wäßrigorganischem Medium erfolgen, ist das (anteilige) organische Lösemittel Aceton, Dioxan oder Dimethylformamid.

Die Kondensationsreaktionen zwischen diesen Aminoverbindungen und der Verbindung Hal-Z erfolgen in der Regel bei einer Temperatur zwischen -10°C und +20°C, vorzugsweise zwischen 0 und 10°C, sowie bei einem pH-Wert zwischen 2 und 7, bevorzugt zwischen 2 und 4. Die Umsetzung mit einer Verbindung Hal-Z mit Hal einem Fluoratom erfolgt insbesondere bevorzugt bei einem pH-Wert zwischen 2 und 3 und bei einer Temperatur zwischen -5°C und +5°C. Die Umsetzung mit Hal-Z, worin Hal für ein Chloratom steht, insbesondere die Umsetzung von Cyanurchlorid oder einer Verbindung der allgemeinen Formel (17)

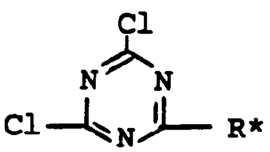

(6)

mit R* der obengenannten Bedeutung, erfolgt insbesondere bevorzugt bei einem pH-Wert zwischen 4 und 6 und einer Temperatur zwischen 10 und 40°C.

Die Kondensationsreaktionen zwischen einer Dihalogentriazinylamino-Verbindung der allgemeinen Formel (12) oder (16) und einer Hydroxy- oder Aminoverbindung entsprechend der allgemeinen Formel H-R* mit R* obengenannter Bedeutung erfolgen ebenso analog bekannten Verfahrensweisen solcher Dihalogen-triazinylamino-Verbindungen mit Hydroxyalkanen, Phenolen und Aminen, so auch in den oben angegebenen Reaktionsmedien unter Einsatz eines säurebindenden Mittels. In der Regel erfolgt die Umsetzung bei einer Temperatur zwischen 10 und 60°C, vorzugsweise zwischen 20 und 40°C, wobei die Umsetzung mit Ausgangsverbindungen, in welchen Hal ein Chloratom bedeutet, insbesondere bevorzugt bei einer Temperatur zwischen 30 und 40°C und einem pH-Wert zwischen 4,0 und 6,5 durchgeführt wird.

Das als Ausgangsverbindung dienende 1-Sulfo-6-carboxy-2-amino-naphthalin ist bisher noch nicht bekannt. Es läßt sich erfindungsgemäß herstellen, indem man 2-Naphthol-6-carbonsäure in einem Schwefelsäure/Schwefeltrioxid-Gemisch (Oleum) mit einem Schwefeltrioxid-Gehalt von 0 bis 65 Gew.-% bei einer Temperatur zwischen -5°C und +40°C, vorzugsweise bei 0 bis 10°C, zunächst zum 1-Sulfo-6-carboxy-2-naphthol sulfiert, diese Verbindung isoliert und anschließend bei einer Temperatur zwischen 100 und 200°C, vorzugsweise zwischen 140 und 160°C, im Autoklaven in einem wäßrigen, alkalischen Medium mit Ammoniumhydrogensulfit umsetzt.

Das 1-Sulfo-6-carboxy-2-naphthol isoliert man aus dem Reaktionsgemisch in üblicher Weise, indem man

den Reaktionsansatz vorsichtig auf Eis gießt. Das ausgefallene Produkt wird abgesaugt, in Eiswasser suspendiert und noch vorhandene Schwefelsäure mittels Natriumcarbonat durch Einstellen der Suspension auf einen pH-Wert zwischen 4 und 4,5 neutralisiert. Die Verbindung kann sodann durch Absaugen und Trocknen isoliert werden.

Der Austausch der Hydroxygruppe durch die Aminogruppe erfolgt in Analogie zur Bucherer-Reaktion. Hierzu geht man in der Regel so vor, daß man das 1-Sulfo-6-carboxy-2-naphthol in einer 20 bis 30 gew.-%igen wäßrigen Ammoniumhydrogensulfit-Lösung löst und das Reaktionsgemisch im Autoklaven unter den obenangegebenen Bedingungen umsetzt. Nach Beendigung dieser Reaktion wird der Ansatz bei Raumtemperatur mit Salzsäure auf einen pH-Wert von 1 gestellt. Man rührt das Gemisch noch etwa 1 Stunde nach, wobei die erfindungsgemäße Sulfo-carboxy-aminonaphthalin-Verbindung als inneres Salz ausfällt und isoliert werden kann.

Die erfindungsgemäßen Verbindungen der allgemeinen Formel (1) - im nachfolgenden als Verbindungen (1) bezeichnet - haben faserreaktive Eigenschaften und besitzen sehr wertvolle Farbstoffeigenschaften. Sie können deshalb zum Färben (einschließlich Bedrucken) von hydroxygruppenhaltigen und/oder carbonamidgruppenhaltigen Materialien verwendet werden. Hierzu können die bei der Synthese der Verbindungen (1) anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Die Abscheidung und Isolierung der Verbindungen (1) aus den wäßrigen Syntheselösungen kann nach allgemein bekannten Methoden für wasserlösliche Verbindungen erfolgen, so beispielsweise durch Ausfällen aus dem Reaktionsmedium mittels eines Elektrolyten, wie beispielsweise Natriumchlorid oder Kaliumchlorid, oder aber durch Eindampfen der Reaktionslösung selbst, beispielsweise durch Sprühtrocknung.

Falls die letztgenannte Art der Isolierung gewählt wird, empfiehlt es sich vielfach, vor dem Eindampfen eventuell in den Lösungen vorhandene Sulfatmengen durch Fällung als Calciumsulfat und Abtrennung durch Filtration zu entfernen.

Gegenstand der vorliegenden Erfindung ist deshalb auch die Verwendung der Verbindungen (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die Verbindungen (1) lassen sich, gemäß der erfindungsgemäßen Anwendung, auf den genannten Substraten, insbesondere auf den genannten Fasermaterialien, nach den für wasserlösliche, faserreaktive Farbstoffe bekannten Anwendungstechniken applizieren und fixieren, so beispielsweise, indem man die Verbindung (1) in gelöster Form auf das Substrat aufbringt oder sie darin einbringt und sie auf diesem oder in diesem durch Hitzeeinwirkung oder durch Einwirkung eines alkalisch wirkenden Mittels oder durch beide Maßnahmen fixiert.
Solche Färbe- und Fixierweisen sind in der Literatur zahlreich beschrieben (bspw. in der europäischen Patentanmeldungs-Veröffentlichung Nr. 0 181 585 A2). Die Verbindungen (1) zeichnen sich durch hohe Auszieh- und Fixiergrade aus.

Insbesondere in den Ausziehverfahren liefern sie, auch in weiten Temperaturbereichen (40 bis 80°C) Färbungen mit hoher Farbtiefe bei einem hohen Fixiergrad.

Die erfindungsgemäßen Färbungen besitzen, insbesondere auf Cellulosefasermaterialien, gute Lichtechtheiten sowohl im trockenen Zustand der Färbung als auch im nassen, beispielsweise mit einer Schweißlösung befeuchteten, Zustand sowie gute Naßechtheiten, wie beispielsweise gute Waschechtheiten bei 60 bis 95°C, auch in Gegenwart von Perboraten, saure und alkalische Walk-, Überfärbe- und Schweißechtheiten, gute saure und alkalische Schweißechtheiten, eine hohe Dampfbeständigkeit, gute Säure-, Wasser- und Seewasserechtheiten, desweiteren eine gute Plissierechtheit, Bügelechtheit und Reibechtheit. Ebenso besitzen sie eine gute Säurelagerbeständigkeit ("acid fading") beim Lagern von feuchten, noch Essigsäure enthaltendem, gefärbtem Material.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Alkalimetallsalze, wie Lithium-, Natrium- oder Kaliumsalze, hergestellt und isoliert und in Form ihrer Salze zum Färben verwendet.

Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

**Beispiel A**

a) 283,6 Teile 2-Naphthol-6-carbonsäure werden unter Rühren und Kühlung bei 5 bis 7°C in 1200 Teile 100%ige Schwefelsäure eingetragen. Man rührt anschließend noch etwa 2 Stunden bei 10°C und danach noch etwa 2 Stunden bei 20°C nach, bis keine Ausgangsverbindung mehr vorhanden ist (HPLC-Analyse). Das Reaktionsgemisch wird danach in 2700 Teile Eis eingerührt. Es bildet sich ein Niederschlag, der abgesaugt und anschließend in Eiswasser suspendiert wird. Die Suspension wird mit Natriumcarbonat auf einen pH-Wert zwischen 4 und 4,5 gestellt, das Produkt abgesaugt, mit 10%iger wäßriger Natriumchloridlösung gewaschen und unter reduziertem Druck bei 40°C getrocknet.

b) 269,2 Teile 1-Sulfo-6-carboxy-2-naphthol werden in 720 Teilen einer wäßrigen, 25%igen Ammoniumhydrogensulfit-Lösung im Autoklaven bei 150°C und einem Druck von 12 bar während etwa 8 Stunden gerührt. Danach läßt man das Reaktionsgemisch abkühlen und stellt bei Raumtemperatur mit Salzsäure einen pH-Wert von 1 ein. Man rührt noch eine Stunde nach und isoliert sodann die als inneres Salz ausgefallene erfindungsgemäße Verbindung in einer Ausbeute von etwa 70 % d.Th.

Die Konstitution des erfindungsgemäßen 1-Sulfo-6-carboxy-2-amino-naphthalins ist durch $^{1}H$- und $^{13}C$-NMR-Spektroskopie sowie durch die Elementaranalyse bestätigt.

**Beispiel 1**

Man diazotiert gemäß einer üblichen Diazotierungsreaktion die Ausgangsverbindung 1-Sulfo-6-carboxy-2-amino-naphthalin und setzt sie durch Kupplungsreaktion bei stark saurem pH-Wert mit der äquivalenten Menge an 3,6-Disulfo-1-amino-8-naphthol um.

59,8 Teile dieser Azoverbindung werden bei einem pH-Wert zwischen 5 und 6 mit der auf üblichem Wege hergestellten Diazoniumverbindung aus 33,7 Teilen der Aminoverbindung, die als Kondensationsprodukt aus den äquivalenten Mengen von 1,3-Diaminobenzol-6-sulfonsäure und 2,4,6-Trifluor-5-chlor-pyrimidin erhältlich ist, gekuppelt. Man isoliert die gebildete erfindungsgemäße Disazoverbindung in üblicher Weise durch Aussalzen. Sie besitzt, in Form der freien Säure geschrieben, die Formel

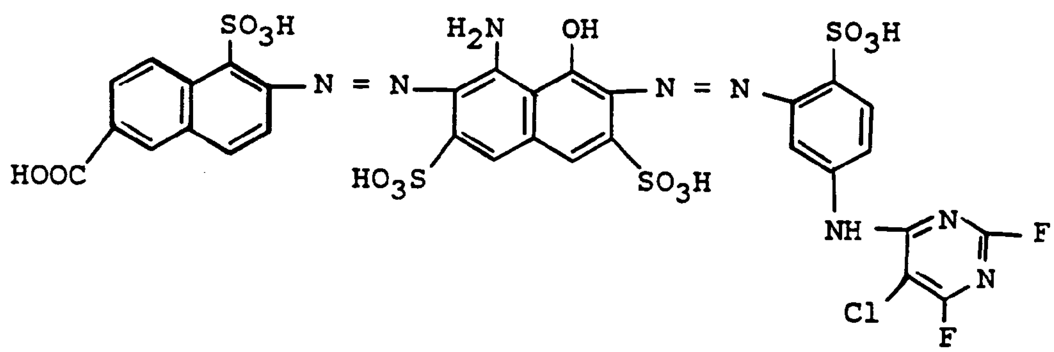

die sehr gute faserreaktive Farbstoffeigenschaften besitzt und die in der Beschreibung genannten Materialien, wie insbesondere Baumwolle, nach den in der Technik für faserreaktive Farbstoffe üblichen Applikations- und Fixierverfahren in farbstarken, echten, rotstichig marineblauen bis schwarzen Tönen färbt.

**Beispiele 2 bis 9**

In den nachfolgenden Tabellenbeispielen sind weitere erfindungsgemäße Disazoverbindungen entsprechend der allgemeinen Formel (A)

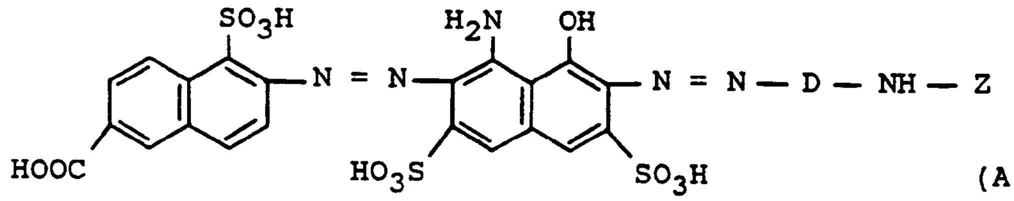

(A)

mit Hilfe der Komponenten D und Z beschrieben. Sie lassen sich in erfindungsgemäßer Weise, beispielsweise analog dem Ausführungsbeispiel 1, durch Einsatz der aus dem jeweiligen Beispiel ersichtlichen Ausgangskomponenten herstellen. Sie besitzen ebenfalls sehr gute faserreaktive Farbstoffeigenschaften und liefern nach den für faserreaktive Farbstoffe üblichen Applikations- und Fixierverfahren auf den in der Beschreibung genannten Materialien, wie insbesondere Cellulosefasermaterialien, wie Baumwolle, farbstarke, echte Färbungen und Drucke mit dem in dem jeweiligen Tabellenbeispiel (hier für Baumwolle) angegebenen Farbton.
Die Formelreste (a) und (b) für den Rest D bedeuten einen Rest der nachstehenden Formeln:

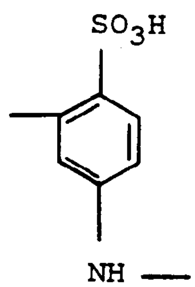

(a)

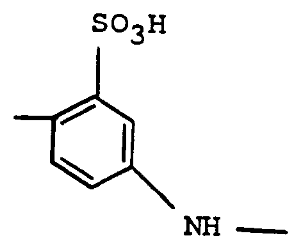

(b)

| Bsp. | Disazoverbindung der Formel (A) Rest D | Rest Z | Farbton |
|---|---|---|---|
| 2 | Formel (a) | 4,6-Dichlor-s-triazin-2-yl | marineblau |
| 3 | Formel (b) | dito | marineblau |
| 4 | Formel (a) | 2,5-Dichlor-4-pyrimidin-6-yl | marineblau |
| 5 | Formel (b) | dito | marineblau |
| 6 | Formel (a) | 2-Fluor-4,5-dichlor-pyrimidin-6-yl | marineblau |
| 7 | Formel (b) | dito | marineblau |
| 8 | Formel (a) | 2,4-Difluor-5-chlor-pyrimidin-6-yl | marineblau |
| 9 | Formel (b) | dito | marineblau |

**Beispiel 10**

27 Teile 1-Sulfo-6-carboxy-2-amino-naphthalin werden in üblicher Weise salzsauer diazotiert und bei einem pH-Wert zwischen 4,0 und 4,5 anfangs bei 0°C, später bei 25 bis 30°C mit 15 Teilen 3-Acetylaminoanilin gekuppelt. Die erhaltene Azoverbindung wird sodann in wäßrigem Medium bei einem pH-Wert von 4,5 und einer Temperatur von 40°C mit 19 Teilen feindispergiertem Cyanurchlorid umgesetzt. Die erhaltene erfindungsgemäße Azoverbindung wird aus der Syntheselösung mit Natriumchlorid ausgesalzen und isoliert. Man erhält das Natriumsalz der Verbindung der Formel

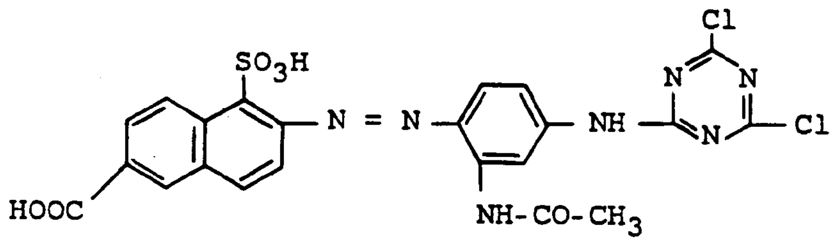

($\lambda_{max}$ = 405 nm).

Sie besitzt sehr gute faserreaktive Farbstoffeigenschaften und liefert nach den herkömmlichen Anwendungsverfahren auf bspw. Baumwolle Färbungen und Drucke in farbstarken, echten, rotstichig gelben Tönen.

**Beispiel 11**

18,4 Teile Cyanurchlorid werden in bekannter Weise mit 31,9 Teilen 1-Amino-3,6-disulfo-8-naphthol in Wasser zum Monokondensationsprodukt umgesetzt, das sodann mit der Lösung des Diazoniumsalzes von 1-Sulfo-6-carboxy-2-amino-naphthalin in äquivalenter Menge versetzt wird; die Kupplungsreaktion erfolgt bei einem pH-Wert zwischen 4,0 und 4,5.
Man isoliert die erfindungsgemäße Azoverbindung in üblicher Weise. Sie besitzt, in Form der freien Säure geschrieben, die Formel

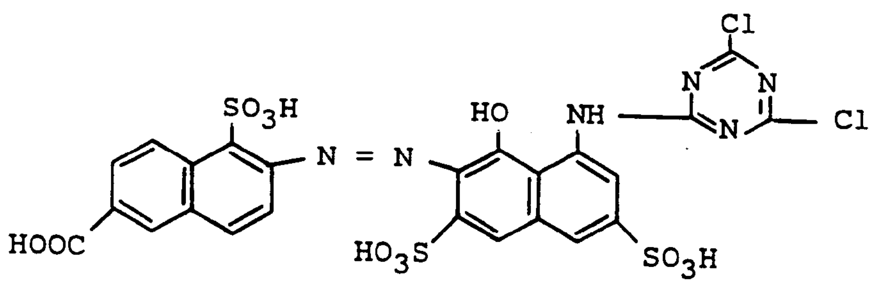

($\lambda_{max}$ = 519 nm),

zeigt sehr gute faserreaktive Farbstoffeigenschaften und liefert auf den in der Beschreibung genannten Materialien, wie beispielsweise Baumwolle, nach den üblichen Applikations- und Fixierverfahren farbstarke, leuchtend rote Färbungen und Drucke mit guten Echtheitseigenschaften und hoher Brillanz.

**Beispiel 12**

31,9 Teile 1-Amino-8-naphthol-3,6-disulfonsäure werden in üblicher Weise mit 19 Teilen Difluor-chlor-pyrimidin umgesetzt. Sodann gibt man in äquivalenter Menge das Diazoniumsalz des 1-Sulfo-6-carboxy-2-amino-naphthalins hinzu und führt die Kupplungsreaktion bei einem pH-Wert von 4,0 bis 4,5 durch. Man isoliert in üblicher Weise, beispielsweise durch Aussalzen, die erhaltene erfindungsgemäße Azoverbindung, die, in Form der freien Säure, die Formel

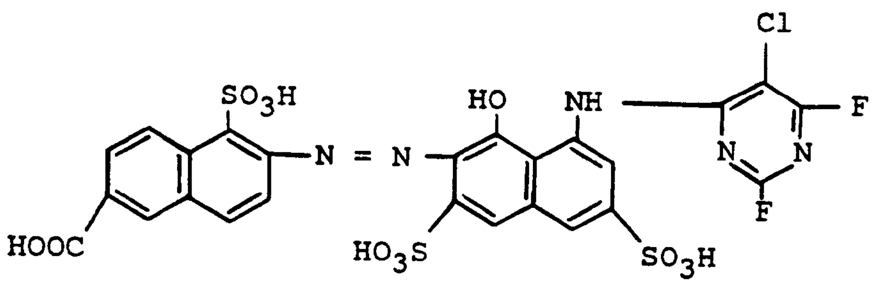

besitzt. Sie zeigt sehr gute faserreaktive Farbstoffeigenschaften und liefert beispielsweise auf Baumwolle gemäß den in der Technik für faserreaktive Farbstoffe üblichen Applikations- und Fixierverfahren farbstarke rote Färbungen und Drucke mit guten Echtheitseigenschaften.

**Beispiele 13 bis 35**

In den nachfolgenden Tabellenbeispielen sind weitere erfindungsgemäße Azoverbindungen mit Hilfe der allgemeinen Formel (B)

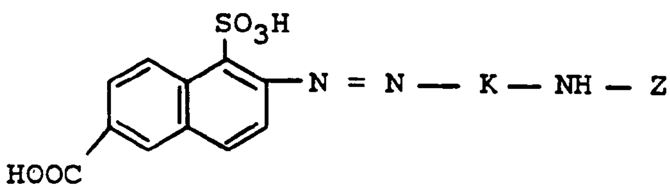

(B)

beschrieben. Sie lassen sich in erfindungsgemäßer Weise, beispielsweise analog einem der obigen Ausführungsbeispiele 10 bis 12, herstellen und zeigen sehr gute faserreaktive Farbstoffeigenschaften. Nach den in der Technik üblichen Applikations- und Fixierverfahren liefern sie beispielsweise auf Baumwolle farbstarke, echte Färbungen und Drucke mit dem für das jeweilige Tabellenbeispiel angegebenen Farbton.

| Bsp. | Disazoverbindung der Formel (B)<br>Rest -K-NH- | Rest Z | Farbton |
|---|---|---|---|
| 13 | 3,6-Disulfo-8-hydroxy-naphth-7-yl-1-amino | 2-Fluor-4,5-dichlor-pyrimidin-6-yl | rot |
| 14 | dito | 2,5-Dichlor-4-fluor-pyrimidin-6-yl | rot |
| 15 | 6-Sulfo-8-hydroxy-naphth-7-yl-2-amino | 4,6-Dichlor-s-triazin-2-yl | orange |
| 16 | dito | 2,4-Difluor-5-chlor-pyrimidin-6-yl | orange |
| 17 | dito | 6-Fluor-4-(4'-sulfo-phenyl)-amino-s-triazin-2-yl | orange |
| 18 | 6-Sulfo-8-hydroxy-naphth-7-yl-3-amino | 4,6-Dichlor-s-triazin-2-yl | scharlach |
| 19 | dito | 2,4-Difluor-5-chlor-pyrimidin-6-yl | scharlach |
| 20 | dito | 2-Fluor-4,5-dichlor-pyrimidin-6-yl | scharlach |
| 21 | dito | 6-Fluor-4-(4'-sulfo-phenyl)-amino-s-triazin-2-yl | scharlach |

| Bsp. | Disazoverbindung der Formel (B) Rest -K-NH- | Rest Z | Farbton |
|---|---|---|---|
| 22 | 3-Ureido-phen-4-yl-1-amino | 4,6-Dichlor-s-triazin-2-yl | gelb |
| 23 | dito | 2,4-Difluor-5-chlor-pyrimidin-6-yl | gelb |
| 24 | dito | 6-Fluor-4-(4'-sulfo-phenyl)-amino-s-triazin-2-yl | gelb |
| 25 | 3-Acetylamino-phen-4-yl-1-amino | 4,6-Dichlor-s-triazin-2-yl | gelb |
| 26 | dito | 2,4-Difluor-5-chlor-pyrimidin-6-yl | gelb |
| 27 | dito | 2-Fluor-4,5-dichlor-pyrimidin-6-yl | gelb |
| 28 | dito | 6-Fluor-4-(4'-sulfo-phenyl)-amino-s-triazin-2-yl | gelb |
| 29 | 3-Methyl-5-on-pyrazol-4-yl-1-(phenyl-4'-amino) | 4,6-Dichlor-s-triazin-2-yl | gelb |
| 30 | dito | 2,4-Difluor-5-chlor-pyrimidin-6-yl | gelb |
| 31 | dito | 6-Fluor-4-(4'-sulfo-phenyl)-amino-s-triazin-2-yl | gelb |
| 32 | 3-Carboxy-5-on-pyrazol-4-yl-1-(phenyl-4'-amino) | 4,6-Dichlor-s-triazin-2-yl | gelb |
| 33 | dito | 2,4-Difluor-5-chlor-pyrimidin-6-yl | gelb |
| 34 | 4-Methyl-6-hydroxy-2-on-pyrid-3-yl-1-(ethyl-2'-amino) | 4,6-Dichlor-s-triazin-2-yl | gelb |
| 35 | dito | 6-Fluor-4-(4'-sulfo-phenyl)-amino-s-triazin-2-yl | gelb |

**Beispiele 36 bis 43**

In den nachfolgenden Tabellenbeispielen sind weitere erfindungsgemäße Disazoverbindungen entsprechend der allgemeinen Formel (C)

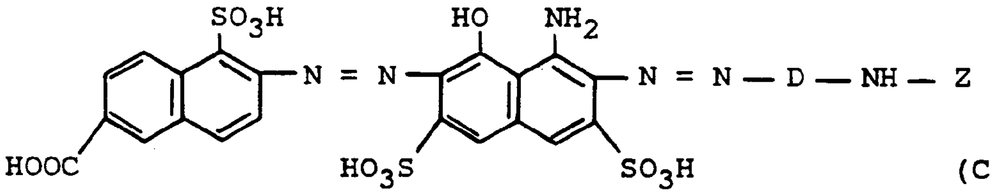

(C)

mit Hilfe der Komponenten D und Z beschrieben. Sie lassen sich in erfindungsgemäßer Weise, beispielsweise analog dem Ausführungsbeispiel 1, durch Einsatz der aus dem jeweiligen Beispiel ersichtlichen Ausgangskomponenten herstellen. Sie besitzen ebenfalls sehr gute faserreaktive Farbstoffeigenschaften und liefern nach den für faserreaktive Farbstoffe üblichen Applikations- und Fixierverfahren auf den in der Beschreibung genannten Materialien, wie insbesondere Cellulosefasermaterialien, wie Baumwolle, farbstarke, echte Färbungen und Drucke mit dem in dem jeweiligen Tabellenbeispiel (hier für Baumwolle) angegebenen Farbton.
Die Formelreste (a) und (b) für den Rest D bedeuten einen Rest der nachstehenden Formeln:

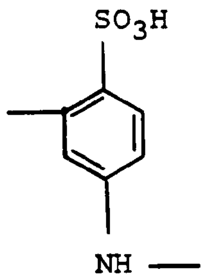

(a)

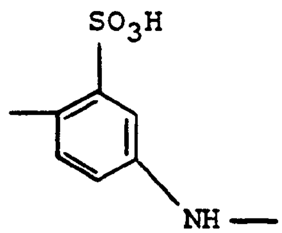

(b)

| Bsp. | Disazoverbindung der Formel (C)<br>Rest D | <br>Rest Z | Farbton |
|---|---|---|---|
| 36 | Formel (a) | 4,6-Dichlor-s-triazin-2-yl | marineblau |
| 37 | Formel (b) | dito | marineblau |
| 38 | Formel (a) | 2,5-Dichlor-4-pyrimidin-6-yl | marineblau |
| 39 | Formel (b) | dito | marineblau |
| 40 | Formel (a) | 2-Fluor-4,5-dichlor-pyrimidin-6-yl | marineblau |
| 41 | Formel (b) | dito | marineblau |
| 42 | Formel (a) | 2,4-Difluor-5-chlor-pyrimidin-6-yl | marineblau |
| 43 | Formel (b) | dito | marineblau |

**Patentansprüche**

1. Azoverbindung entsprechend der allgemeinen Formel (1)

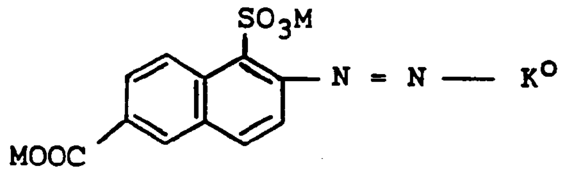
(1)

in welcher bedeuten:

M ist ein Wasserstoffatom oder salzbildendes Metallatom, wie bevorzugt ein Alkalimetallatom;

K° ist ein Rest der allgemeinen Formel (2A) oder (2B)

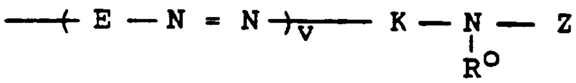
(2A)

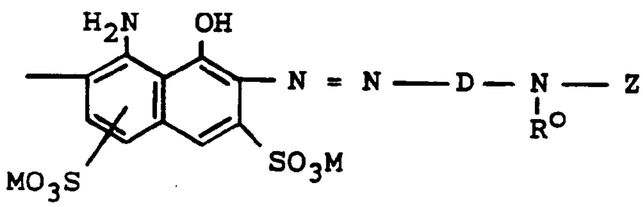
(2B)

in welchen

M die obengenannte Bedeutung besitzt,

R° Wasserstoff oder Alkyl von 1 bis 4 C-Atomen ist oder Alkyl von 1 bis 4 C-Atomen ist, das durch Sulfo, Carboxy, Sulfato, Phosphato, Hydroxy, Methoxy, Ethoxy, Phenyl, Monosulfophenyl oder Disulfophenyl substituiert ist, bevorzugt Wasserstoff ist,

Z ein einen alkalisch abspaltbaren Substituenten enthaltender faserreaktiver Rest der Pyrimidin- oder Triazinreihe ist,

D einen Rest der allgemeinen Formel (3)

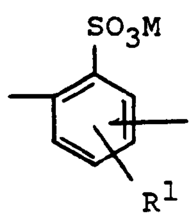
(3)

bedeutet, in welcher

M eine der obengenannten Bedeutungen hat und

$R^1$ Wasserstoff oder Alkyl von 1 bis 4 C-Atomen ist,

E ein Rest der allgemeinen Formel (4a), (4b), (4c) oder (4d)

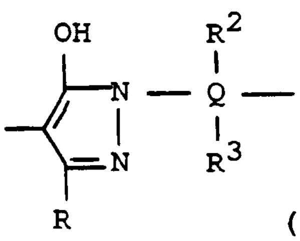
(4a)

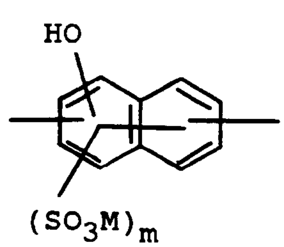
(4b)

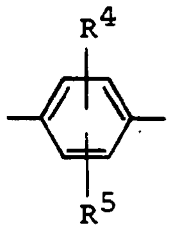

(4c)

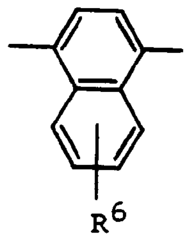

(4d)

ist, in welchen

R Wasserstoff, Alkyl von 1 bis 4 C-Atomen, Cyano, Carboxy, Carbalkoxy von 2 bis 5 C-Atomen, Carbamoyl oder Phenyl ist,

Q ein Benzol- oder Naphthalinrest ist,

$R^2$ Wasserstoff, Alkyl von 1 bis 4 C-Atomen, Alkoxy von 1 bis 4 C-Atomen, Fluor, Brom, Chlor, Sulfo, Carboxy, Carbalkoxy von 2 bis 5 C-Atomen, Trifluormethyl, Carbamoyl oder N-($C_1$-$C_4$-Alkyl)-carbamoyl ist, falls Q einen Benzolring bedeutet, oder

$R^2$ Wasserstoff oder Sulfo ist, falls Q einen Naphthalinring bedeutet,

$R^3$ Wasserstoff, Alkyl von 1 bis 4 C-Atomen, Alkoxy von 1 bis 4 C-Atomen, Chlor oder Sulfo ist, falls Q einen Benzolrest bedeutet, oder Wasserstoff oder Sulfo ist, falls Q einen Naphthalinrest bedeutet,

$R^4$ Wasserstoff, Alkyl von 1 bis 4 C-Atomen, Alkoxy von 1 bis 4 C-Atomen, Brom, Chlor, Trifluormethyl, Sulfo, Carboxy oder Cyano ist,

$R^5$ Wasserstoff, Alkyl von 1 bis 4 C-Atomen, Alkoxy von 1 bis 4 C-Atomen, Chlor, Amino, Alkylamino von 1 bis 4 C-Atomen, Alkanoylamino von 2 bis 5 C-Atomen, Benzoylamino, Ureido, N′-Phenylureido, N′-($C_1$-$C_4$-Alkyl)-ureido, Phenylsulfonyl oder Alkylsulfonyl von 1 bis 4 C-Atomen ist,

$R^6$ Wasserstoff oder Sulfo ist,

M eine der obengenannten Bedeutungen hat,

m die Zahl 1 oder 2 bedeutet,

v die Zahl Null oder 1 ist und -K-N($R^o$)- ein Rest der allgemeinen Formel (5a), (5b), (5c), (5d), (5e), (5f), (5g), (5h) oder (5i)

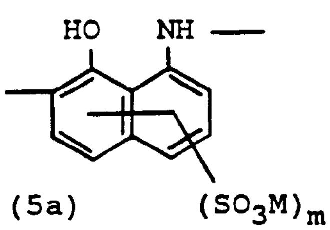

(5a)

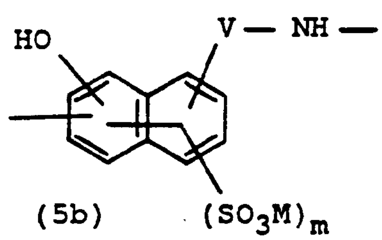

(5b)

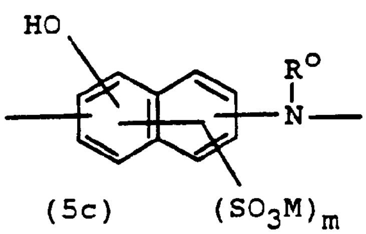

(5c)

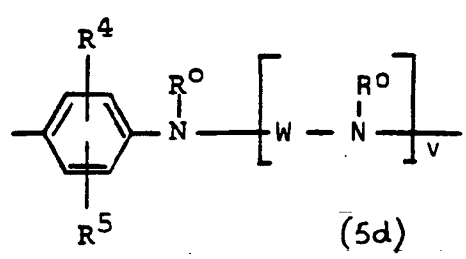

(5d)

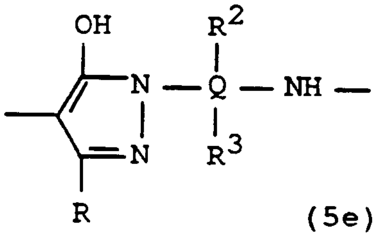

(5e)'

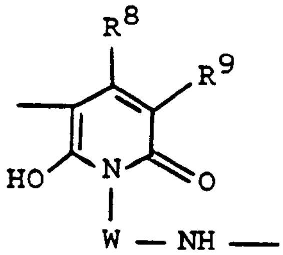

(5f)

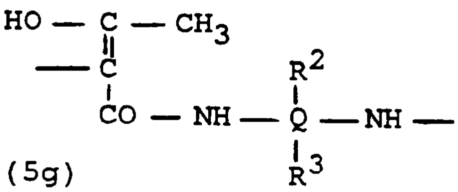

(5g)

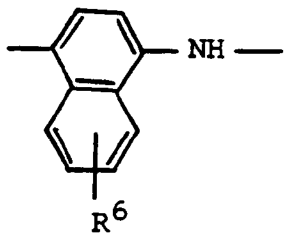

(5h)

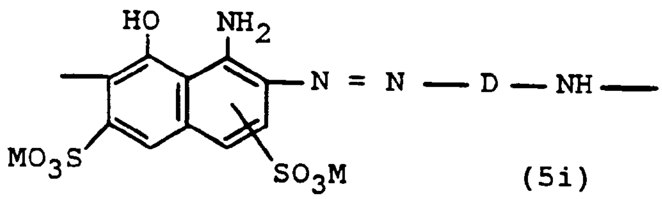

(5i)

ist, in welchen

M, m, Q, D, R, R°, $R^1$, $R^2$, $R^3$, $R^4$, $R^5$, $R^6$ und v eine der obengenannten Bedeutungen besitzen,

V eine direkte, kovalente Bindung oder ein Rest der Formel -NH-CO-phenylen-, -NH-CO-NH-phenylen-, $-N(CH_3)-CO-$phenylen-, $-N(CH_3)-CO-NH-$phenylen- oder -NH-phenylen- ist,

W ein Phenylenrest ist, der durch 1 oder 2 Substituenten aus der Gruppe Alkyl von 1 bis 4 C-Atomen, Alkoxy von 1 bis 4 C-Atomen, Chlor, Carboxy und Sulfo substituiert sein kann, oder ein Alkylen von 1 bis 6 C-Atomen ist oder ein Alkylen-phenylen mit einem Alkylen von 2 bis 4 C-Atomen ist,

$R^8$ Wasserstoff, Alkyl von 1 bis 4 C-Atomen, Alkoxy von 1 bis 4 C-Atomen, Phenyl oder durch Cyano substituiertes Alkyl von 1 bis 4 C-Atomen ist und

$R^9$ Wasserstoff, Sulfo, Sulfoalkyl von 1 bis 4 C-Atomen, Cyano oder Carbamoyl ist.

2. Azoverbindung nach Anspruch 1, dadurch gekennzeichnet, daß R Methyl, Carboxy, Carbomethoxy oder Carbethoxy ist.

3. Azoverbindung nach Anspruch 1 oder 2, dadurch gekennzeichnet, daß $R^2$ Wasserstoff, Methoxy, Ethoxy, Methyl oder Chlor ist, falls Q einen Benzolring bedeutet, oder Wasserstoff oder Sulfo ist, falls Q einen Naphthalinring bedeutet.

4. Azoverbindung nach mindestens einem der Ansprüche 1 bis 3, dadurch gekennzeichnet, daß $R^3$ Wasserstoff, Methoxy, Ethoxy oder Methyl ist, falls Q einen Benzolring bedeutet, oder Wasserstoff oder Sulfo ist, falls Q einen Naphthalinrest bedeutet.

5. Azoverbindung nach Anspruch 1, dadurch gekennzeichnet, daß $R^4$ Wasserstoff, Chlor, Methyl, Ethoxy, Methoxy oder Sulfo ist und $R^5$ Ureido, Acetylamino oder Propionylamino ist.

6. Azoverbindung nach Anspruch 1, dadurch gekennzeichnet, daß K° ein Rest der allgemeinen Formel (2B)

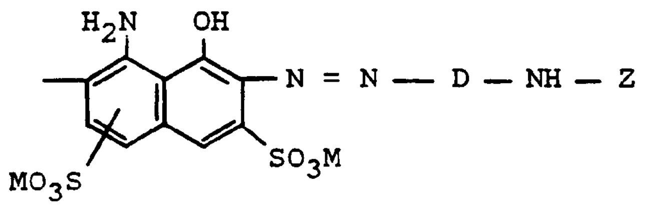

(2B)

ist, in welcher M, D und Z die in Anspruch 1 genannten Bedeutungen haben.

7. Azoverbindung nach Anspruch 1, dadurch gekennzeichnet, daß K° einen Rest der allgemeinen Formel (9a), (9b), (9c), (9d), (9e) oder (9f)

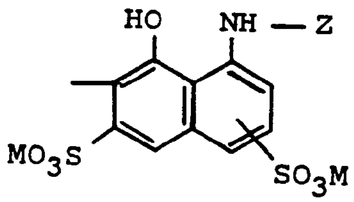

(9a)

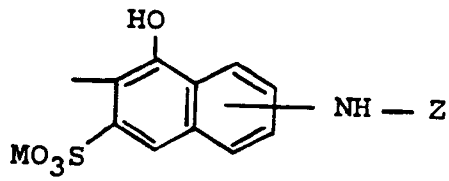

(9b)

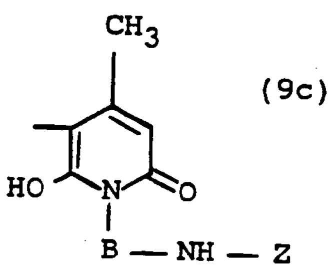

(9c)

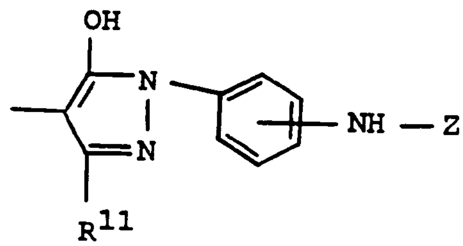

(9d)

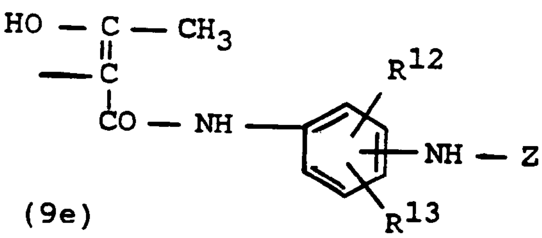

(9e)

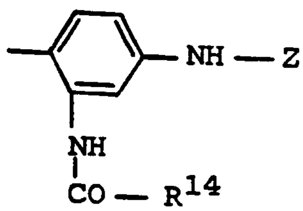

(9f)

ist, in welchen

| | |
|---|---|
| M und Z | eine der obengenannten Bedeutungen haben, |
| B | Alkylen von 2 bis 4 C-Atomen oder Phenylen ist, |
| $R^{11}$ | Carboxy, Methyl oder Carbethoxy ist, |
| $R^{12}$ | Wasserstoff, Methyl, Methoxy, Sulfo oder Chlor ist, |
| $R^{13}$ | Wasserstoff, Methyl oder Methoxy ist und |
| $R^{14}$ | Methyl oder Amino ist. |

8. Azoverbindung nach Anspruch 1, dadurch gekennzeichnet, daß K° einen Rest der allgemeinen Formel

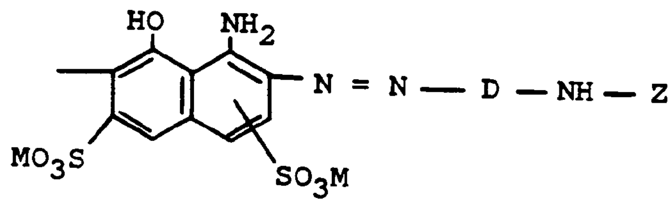

in welcher M, D und Z die in Anspruch 1 genannten Bedeutungen haben.

**9.** Azoverbindung nach mindestens einem der Ansprüche 1 bis 8, dadurch gekennzeichnet, daß Z ein Rest der allgemeinen Formel (6)

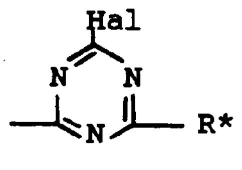

(6)

ist, in welcher
Hal ein Chlor- oder Fluoratom bedeutet und
R* eine Gruppe der allgemeinen Formel (7)

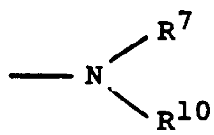

(7)

ist, in welcher

| | |
|---|---|
| $R^7$ | Wasserstoff oder Alkyl von 1 bis 4 C-Atomen ist oder Alkyl von 1 bis 4 C-Atomen bedeutet, das durch Sulfo, Carboxy, Sulfato, Phosphato, Hydroxy, Methoxy, Ethoxy, Phenyl, Monosulfophenyl oder Disulfophenyl substituiert ist, |
| $R^{10}$ | Wasserstoff, Alkyl von 1 bis 4 C-Atomen ist oder Alkyl von 1 bis 4 C-Atomen ist, das durch Sulfo, Carboxy, Sulfato, Phosphato, Hydroxy, Methoxy, Ethoxy, Phenyl, Monosulfophenyl oder Disulfophenyl substituiert ist, oder ein Cycloalkylen von 5 oder 6 C-Atomen ist, das durch 1, 2 oder 3 Methylgruppen substituiert sein kann, oder ein Phenylrest ist, der durch 1 oder 2 Substituenten aus der Gruppe Methyl, Ethyl, Methoxy, Ethoxy, Chlor, Sulfo und Carboxy substituiert sein kann, oder |
| $R^7$ und $R^{10}$ | bilden zusammen mit dem N-Atom einen 5- oder 6-gliedrigen heterocyclischen Rest, der eine oder zwei weitere Heteroatome und/oder Heterogruppen enthalten kann. |

**10.** Azoverbindung nach Anspruch 9, dadurch gekennzeichnet, daß $R^7$ Wasserstoff, Methyl oder Ethyl ist und $R^{10}$ ein Phenylrest ist, der durch 1 oder 2 Sulfogruppen substituiert ist.

**11.** Azoverbindung nach Anspruch 1 der Formel

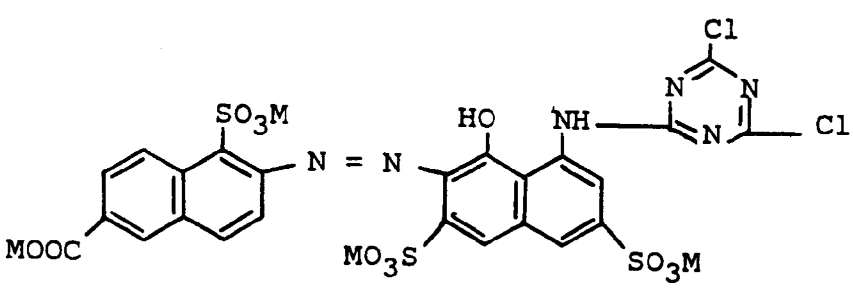

mit M der in Anspruch 1 genannten Bedeutung.

12. Azoverbindung nach Anspruch 1 der Formel

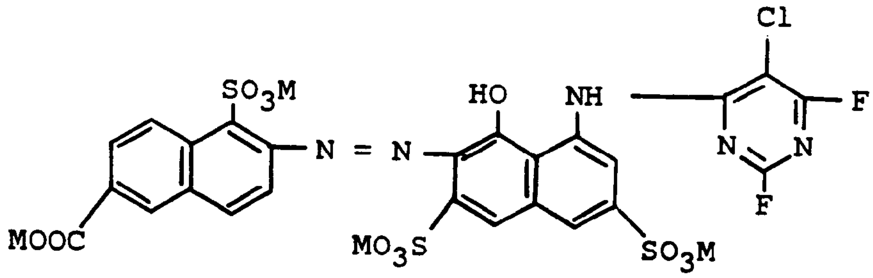

mit M der in Anspruch 1 genannten Bedeutung.

13. Azoverbindung nach Anspruch 1 entsprechend der allgemeinen Formel

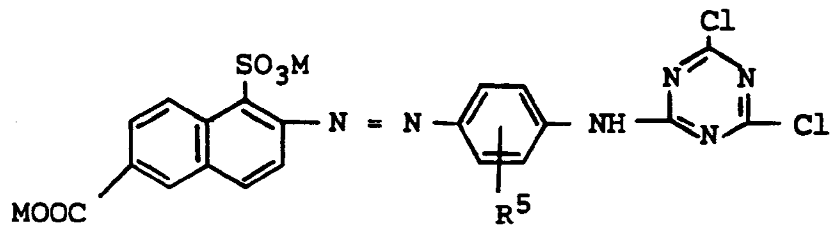

in welcher M die in Anspruch 1 genannte Bedeutung besitzt und $R^5$ gleich Methyl, Ureido oder Acetylamino ist.

14. Azoverbindung nach Anspruch 1 entsprechend der allgemeinen Formel (1), in welcher K° einen Rest der allgemeinen Formel (2B) bedeutet, in welcher $R^1$ Wasserstoff und Z gleich 2,4-Dichlor-s-triazin-6-yl oder Difluor-chlorpyrimidinyl ist.

15. Verfahren zur Herstellung einer Azoverbindung von Anspruch 1, dadurch gekennzeichnet, daß man im Falle, daß K° einen Rest der allgemeinen Formel (2A) bedeutet, die Diazoniumverbindung eines Amins der allgemeinen Formel (10)

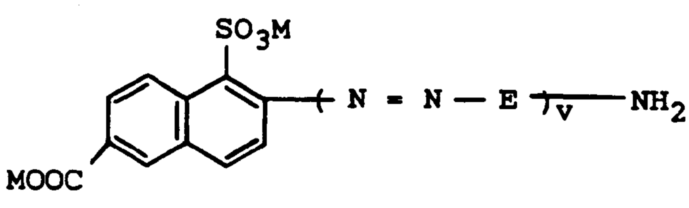

(10)

in welcher M, E und v die in Anspruch 1 genannten Bedeutungen haben, mit einer Verbindung der allgemeinen Formel H-K-N(R°)-Z mit K, R° und Z der in Anspruch 1 genannten Bedeutung kuppelt, oder daß man eine Verbindung der allgemeinen Formel (11)

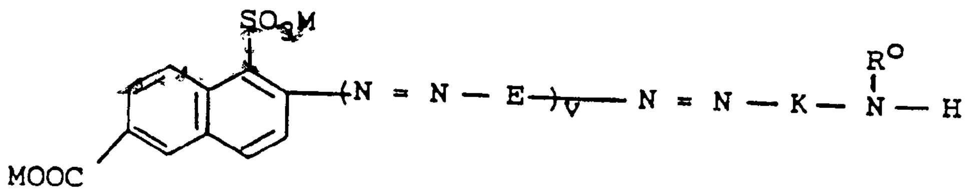

(11)

in welcher M, E, v, R° und K die in Anspruch 1 genannten Bedeutungen haben, mit einer Verbindung der allgemeinen Formel Hal-Z mit Hal und Z der in Anspruch 1 genannten Bedeutung umsetzt, oder daß man im Falle zur Herstellung einer Verbindung (1), die als Rest Z einen faserreaktiven Rest der Formel (6) besitzt, eine Verbindung der allgemeinen Formel (12) oder (16)

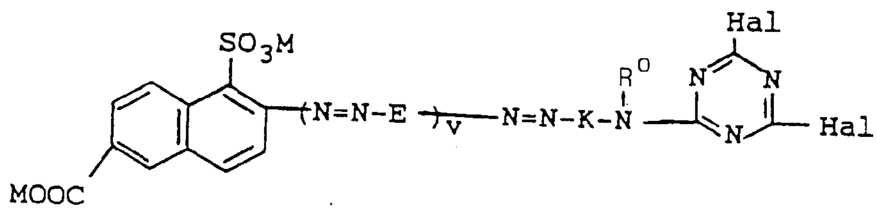

(12)

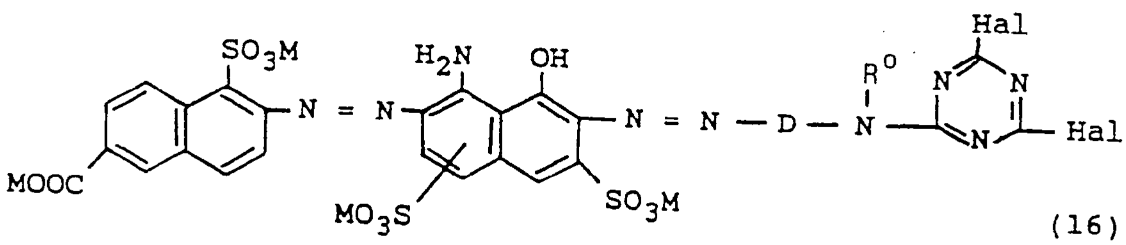

(16)

in welchen D, R°, M, E, v und K eine der in Anspruch 1 genannten Bedeutungen haben und Hal wie oben definiert ist, bevorzugt beide Hal jedoch Chlor bedeuten,
mit einer Verbindung der allgemeinen Formel H-R* mit R* der in Anspruch 1 genannten Bedeutung in äquivalenten Mengen umsetzt,
und daß man im Falle von K° gleich einem Rest der allgemeinen Formel (2B) eine Verbindung der allgemeinen Formel (13)

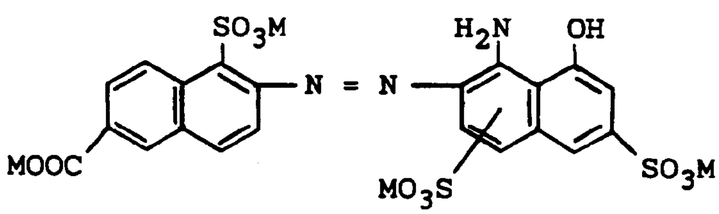

(13)

in welcher M die in Anspruch 1 genannte Bedeutung besitzt, mit der Diazoniumverbindung eines Amins der allgemeinen Formel (14)

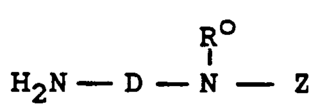

(14)

in welcher D und Z die in Anspruch 1 genannten Bedeutungen haben, kuppelt, oder daß man eine Verbindung der allgemeinen Formel (15)

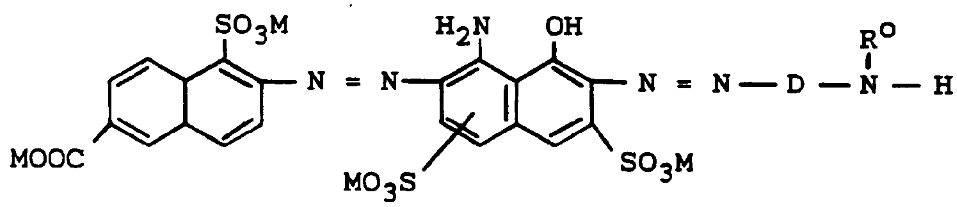

(15)

in welcher D, R° und M die in Anspruch 1 genannten Bedeutungen haben, mit einer Verbindung der allgemeinen Formel Hal-Z mit Hal und Z der in Anspruch 1 genannten Bedeutung umsetzt.

**16.** Verwendung einer Verbindung entsprechend der allgemeinen Formel (1) von Anspruch 1 zum Färben (einschließlich Bedrucken) von hydroxy- und/oder carbonamidgruppenhaltigem Material, insbesondere Fasermaterial.

**17.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder darin einbringt und ihn mittels Wärme und/oder mit Hilfe eines alkalisch wirkenden Mittels fixiert, dadurch gekennzeichnet, daß man als Farbstoff eine Verbindung entsprechend der allgemeinen Formel (1) von Anspruch 1 einsetzt.

## Claims

**1.** An azo compound which corresponds to the formula (1)

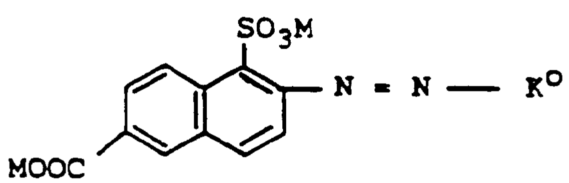

(1)

in which:

M is a hydrogen atom or a salt-forming metal atom such as, preferably, an alkali metal atom;

K° is a radical of the formula (2A) or (2B)

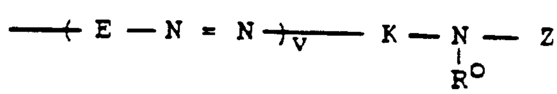

(2A)

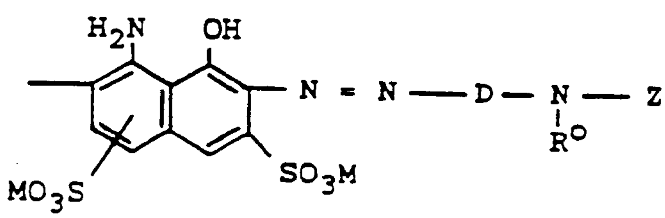

(2B)

in which

M has the abovementioned meaning,

R° is hydrogen or alkyl having 1 to 4 carbon atoms, or alkyl which has 1 to 4 carbon atoms and which is substituted by sulfo, carboxyl, sulfato, phosphato, hydroxyl, methoxy, ethoxy, phenyl, monosulfophenyl or disulfophenyl, and is preferably hydrogen,

Z is a fiber-reactive radical from the pyrimidine or triazine series which contains an alkali-detachable substituent,

D is a radical of the formula (3)

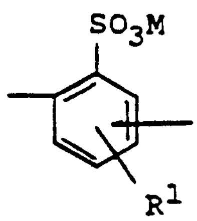

(3)

in which

M has one of the abovementioned meanings and

$R^1$ is hydrogen or alkyl having 1 to 4 carbon atoms,

E is a radical of the formula (4a), (4b), (4c) or (4d)

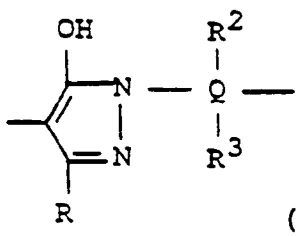

(4a)

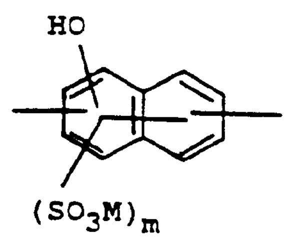

(4b)

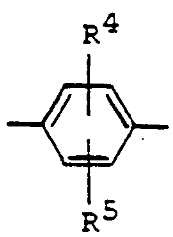

(4c)

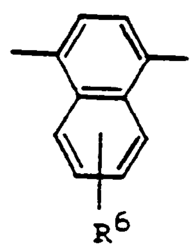

(4d)

in which

R is hydrogen, alkyl having 1 to 4 carbon atoms, cyano, carboxyl, carbalkoxy having 2 to 5 carbon atoms, carbamoyl or phenyl,

Q is a benzene or naphthalene radical,

$R^2$ is hydrogen, alkyl having 1 to 4 carbon atoms, alkoxy having 1 to 4 carbon atoms, fluorine, bromine, chlorine, sulfo, carboxyl, carbalkoxy having 2 to 5 carbon atoms, trifluoromethyl, carbamoyl or N-($C_1$-$C_4$-alkyl)-carbamoyl, if Q is a benzene ring, or

$R^2$ is hydrogen or sulfo , if Q is a naphthalene ring,

$R^3$ is hydrogen, alkyl having 1 to 4 carbon atoms, alkoxy having 1 to 4 carbon atoms, chlorine or sulfo, if Q is a benzene radical, or is hydrogen or sulfo, if Q is a naphthalene radical,

$R^4$ is hydrogen, alkyl having 1 to 4 carbon atoms, alkoxy having 1 to 4 carbon atoms, bromine, chlorine, trifluoromethyl, sulfo, carboxyl or cyano,

$R^5$ is hydrogen, alkyl having 1 to 4 carbon atoms, alkoxy having 1 to 4 carbon atoms, chlorine, amino, alkylamino having 1 to 4 carbon atoms, alkanoylamino having 2 to 5 carbon atoms, benzoylamino, ureido, N'-phenylureido, N'-($C_1$-$C_4$-alkyl)ureido, phenylsulfonyl or alkylsulfonyl having 1 to 4 carbon atoms,

$R^6$ is hydrogen or sulfo,

M has one of the abovementioned meanings,

m is the number 1 or 2,

v is the number zero or 1 and -K-N($R^o$)- is a radical of the formula (5a), (5b), (5c), (5d), (5e), (5f), (5g), (5h) or (5i)

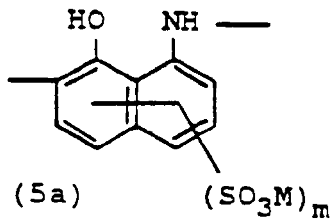

(5a)

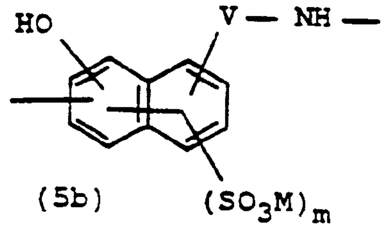

(5b)

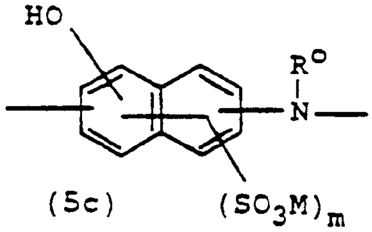

(5c)

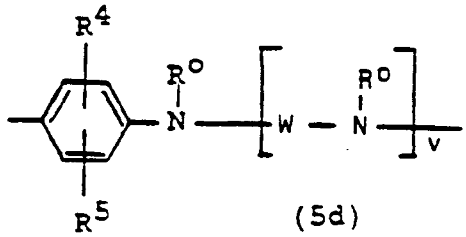

(5d)

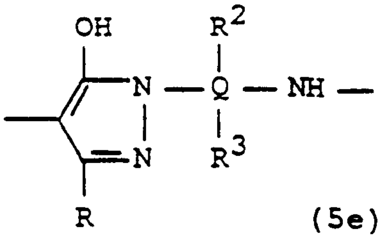

(5e)'

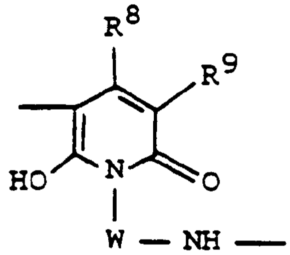

(5f)

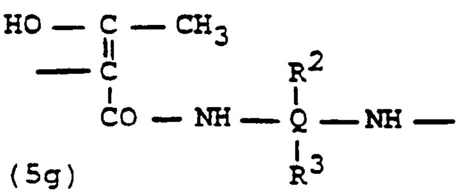

(5g)

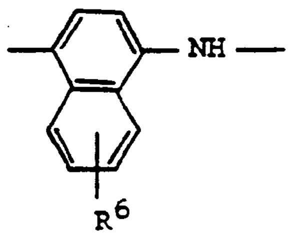

(5h)

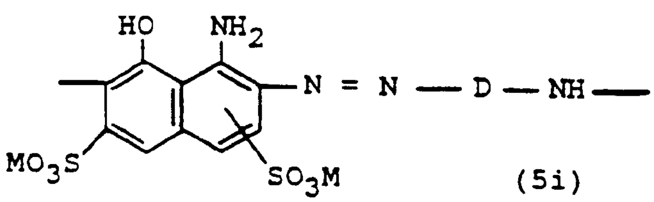

(5i)

in which

M, m, Q, D, R, R°, $R^1$, $R^2$, $R^3$, $R^4$, $R^5$, $R^6$ and v have one of the abovementioned meanings,

V is a direct, covalent bond or a radical of the formula -NH-CO-phenylene-, -NH-CO-NH-phenylene-, -N($CH_3$)-CO-phenylene-, -N($CH_3$)-CO-NH-phenylene- or -NH-phenylene-,

W is a phenylene radical which can be substituted by 1 or 2 substituents selected from the group comprising alkyl having 1 to 4 carbon atoms, alkoxy having 1 to 4 carbon atoms, chlorine, carboxyl and sulfo, or is an alkylene having 1 to 6 carbon atoms, or an alkylenephenylene with an alkylene having 2 to 4 carbon atoms,

$R^8$ is hydrogen, alkyl having 1 to 4 carbon atoms, alkoxy having 1 to 4 carbon atoms, phenyl, or alkyl which has 1 to 4 carbon atoms and is substituted by cyano, and

$R^9$ is hydrogen, sulfo, sulfoalkyl having 1 to 4 carbon atoms, cyano or carbamoyl.

2. An azo compound as claimed in claim 1, wherein R is methyl, carboxyl, carbomethoxy or carboethoxy.

3. An azo compound as claimed in claim 1 or 2, wherein $R^2$ is hydrogen, methoxy, ethoxy, methyl or chlorine, if Q is a benzene ring, or is hydrogen or sulfo, if Q is a naphthalene ring.

4. An azo compound as claimed in at least one of claims 1 to 3, wherein $R^3$ is hydrogen, methoxy, ethoxy or methyl, if Q is a benzene ring, or is hydrogen or sulfo, if Q is a naphthalene ring.

5. An azo compound as claimed in claim 1, wherein $R^4$ is hydrogen, chlorine, methyl, ethoxy, methoxy or sulfo, and $R^5$ is ureido, acetylamino or propionylamino.

6. An azo compound as claimed in claim 1, wherein K° is a radical of the formula (2B)

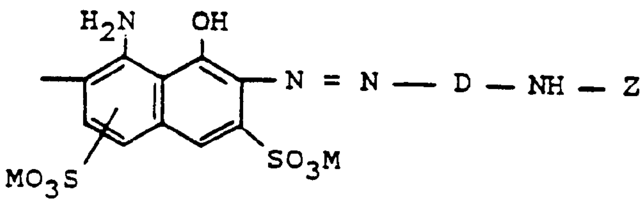

(2B)

in which M, D and Z have the meanings given in claim 1.

7. An azo compound as claimed in claim 1, wherein K° is a radical of the formula (9a), (9b), (9c), (9d), (9e) or (9f)

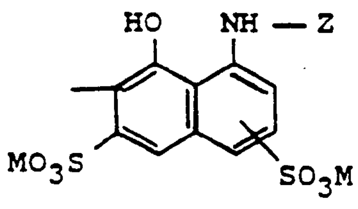

(9a)

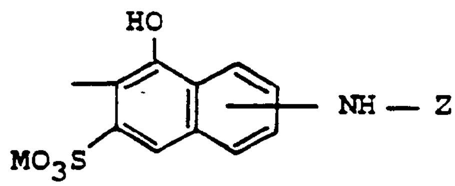

(9b)

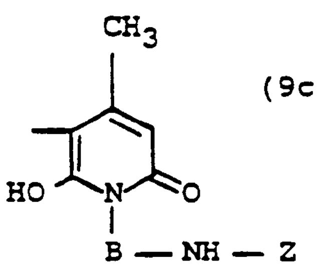

(9c)

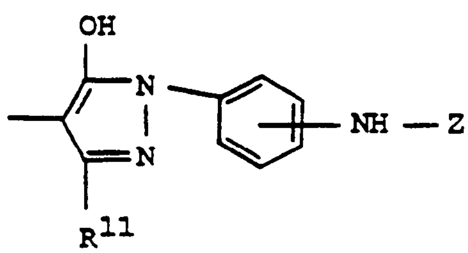

(9d)

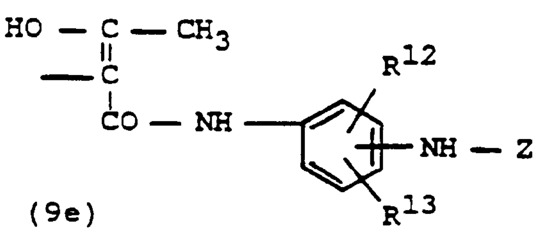

(9e)

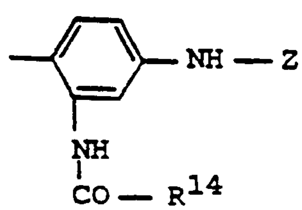

(9f)

in which

M and Z have one of the abovementioned meanings,

B is alkylene having 2 to 4 carbon atoms or phenylene,

$R^{11}$ is carboxyl, methyl or carboethoxy,

| | |
|---|---|
| $R^{12}$ | is hydrogen, methyl, methoxy, sulfo or chlorine, |
| $R^{13}$ | is hydrogen, methyl or methoxy and |
| $R^{14}$ | is methyl or amino. |

**8.** An azo compound as claimed in claim 1, wherein K° is a radical of the formula

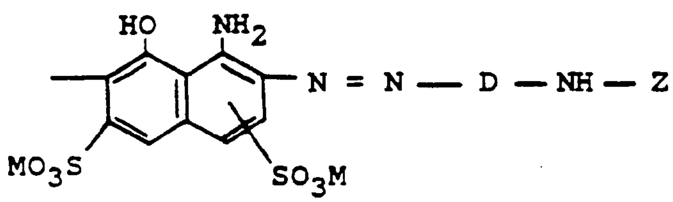

in which M, D and Z have the meanings given in claim 1.

**9.** An azo compound as claimed in at least one of claims 1 to 8, wherein Z is a radical of the formula (6)

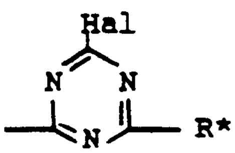

(6)

in which
Hal is a chlorine or fluorine atom, and
R* is a group of the formula (7)

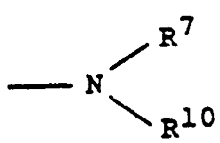

(7)

in which

| | |
|---|---|
| $R^7$ | is hydrogen or alkyl having 1 to 4 carbon atoms, or alkyl which has 1 to 4 carbon atoms and which is substituted by sulfo, carboxyl, sulfato, phosphato, hydroxyl, methoxy, ethoxy, phenyl, monosulfophenyl or disulfophenyl, |
| $R^{10}$ | is hydrogen, alkyl having 1 to 4 carbon atoms, or alkyl which has 1 to 4 carbon atoms and which is substituted by sulfo, carboxyl, sulfato, phosphato, hydroxyl, methoxy, ethoxy, phenyl, monosulfophenyl or disulfophenyl, or is a cycloalkylene which has 5 or 6 carbon atoms and which can be substituted by 1, 2 or 3 methyl groups, or is a phenyl radical which can be substituted by 1 or 2 substituents selected from the group comprising methyl, ethyl, methoxy, ethoxy, chlorine, sulfo and carboxyl, or |
| $R^7$ and $R^{10}$ | together with the N atom form a 5- or 6- membered heterocyclic radical which can contain one or two further hetero atoms and/or hetero groups. |

**10.** An azo compound as claimed in claim 9, wherein $R^7$ is hydrogen, methyl or ethyl and $R^{10}$ is a phenyl radical which is substituted by 1 or 2 sulfo groups.

**11.** An azo compound as claimed in claim 1, of the formula

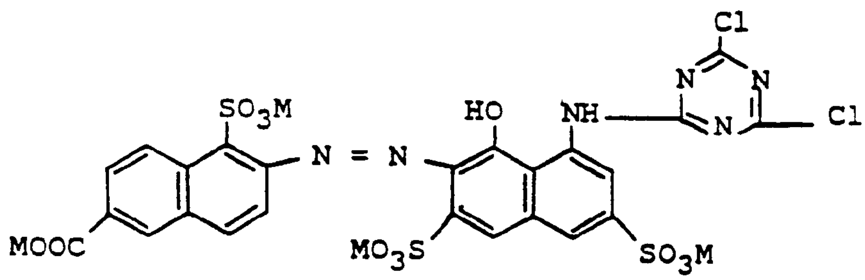

where M has the meaning given in claim 1.

**12.** An azo compound as claimed in claim 1, of the formula

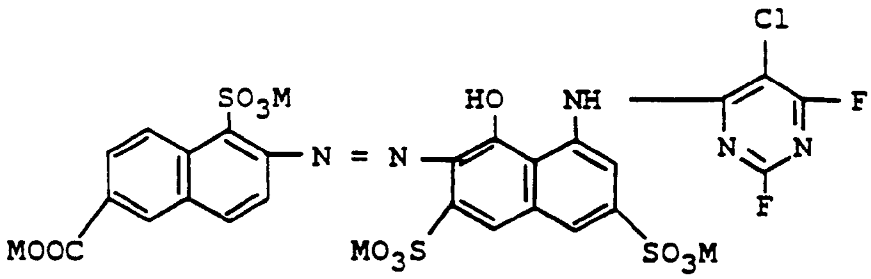

where M has the meaning given in claim 1.

**13.** An azo compound as claimed in claim 1, which corresponds to the formula

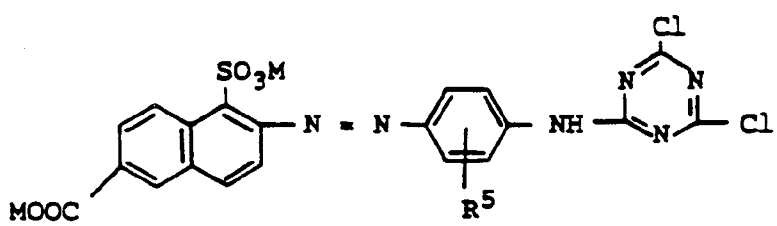

in which M has the meaning given in claim 1 and $R^5$ is methyl, ureido or acetylamino.

**14.** An azo compound as claimed in claim 1, which corresponds to the formula (1) in which $K^o$ is a radical of the formula (2B), in which $R^1$ is hydrogen and Z is 2,4-dichloro-s-triazin-6-yl or difluorochloropyrimidinyl.

**15.** A process for the preparation of an azo compound of claim 1, which comprises, in the event that $K^o$ is a radical of the formula (2A), coupling the diazonium compound of an amine of the formula (10)

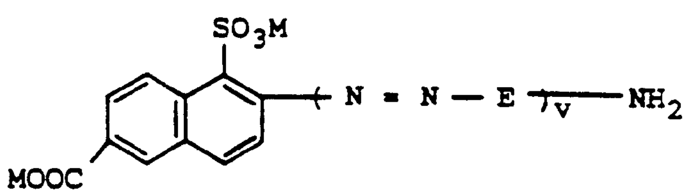

(10)

in which M, E and v have the meanings given in claim 1, with a compound of the formula $H-K-N(R^o)-Z$ where K, $R^o$ and Z have the meanings given in claim 1, or reacting a compound of the formula (11)

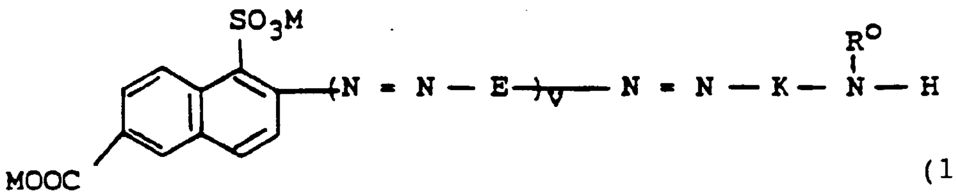

(11)

in which M, E, v, R° and K have the meanings given in claim 1, with a compound of the formula Hal-Z where Hal and Z have the meanings given in claim 1, or, in the event that a compound (1) is to be prepared which has a fiber- reactive radical of the formula (6) as the radical Z, reacting a compound of the formula (12) or (16)

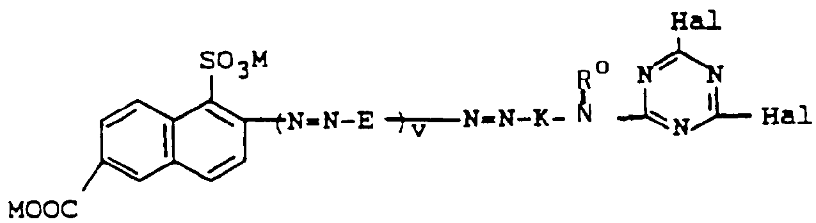

(12)

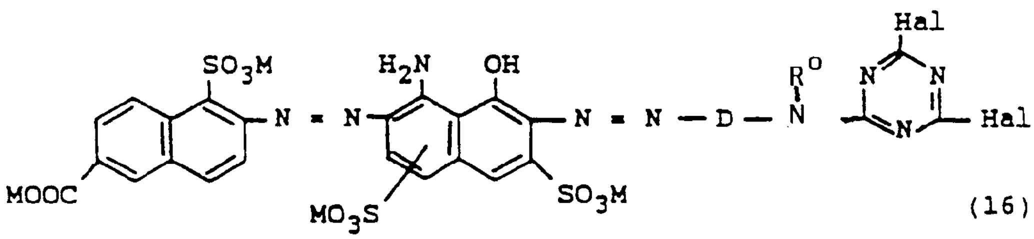

(16)

in which D, R°, M, E, v and K have one of the meanings given in claim 1 and Hal is as defined above, but each Hal is preferably chlorine, with a compound of the formula H-R* where R* has the meaning given in claim 1, in equivalent amounts,

and, in the event that K° is a radical of the formula (2B), coupling a compound of the formula (13)

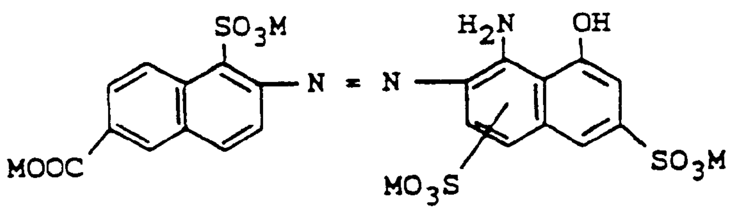

(13)

in which M has the meaning given in claim 1, with the diazonium compound of an amine of the formula (14)

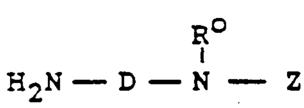

(14)

in which D and Z have the meanings given in claim 1, or reacting a compound of the formula (15)

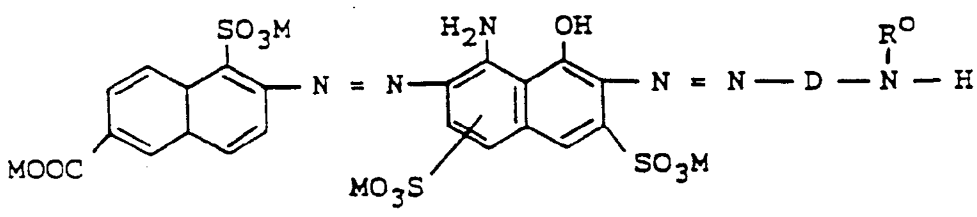

(15)

in which D, R° and M have the meanings given in claim 1, with a compound of the formula Hal-Z where Hal and Z have the meanings given in claim 1.

16. The use of a compound which corresponds to the formula (1) of claim 1, for dyeing (including printing) hydroxyl- and/or carboxamido-containing material, in particular fiber material.

17. A process for dyeing (including printing) hydroxyl- and/or carboxamido-containing material, in particular fiber material, in which a dye is applied to the material, or incorporated therein, and fixed by means of heat and/or with the aid of an agent with an alkaline action, which comprises the use of a compound which corresponds to the formula (1) of claim 1 as the dye.

## Revendications

1. Composé azoïque correspondant à la formule générale (1)

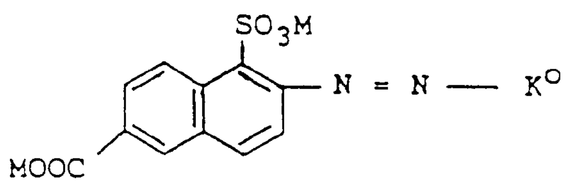

(1)

dans laquelle

M est un atome d'hydrogène ou un atome métallique formant un sel, tel que, de préférence, un atome de métal alcalin;

K° est un reste de formule générale (2A) ou (2B)

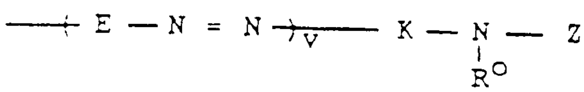

(2A)

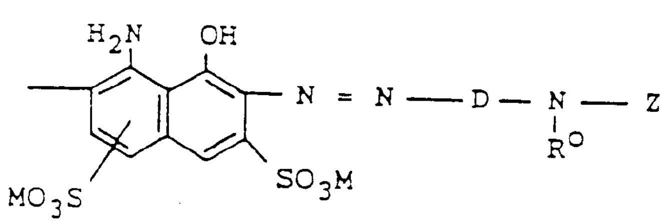

(2B)

dans lesquelles

M a la signification indiquée ci-dessus;

R° représente un hydrogène ou un groupe alkyle de 1 à 4 atomes de carbone, ou est un groupe alkyle de 1 à 4 atomes de carbone qui est substitué par un groupe sulfo, carboxy, sulfato, phosphato, hydroxy, méthoxy, éthoxy, phényle, monosulfophényle ou disulfophényle, et représente

de préférence un hydrogène,

Z est un reste réactif sur les fibres de la série de la pyrimidine ou de la triazine, contenant des substituants pouvant être séparés en milieu alcalin,

D représente un reste de formule générale (3)

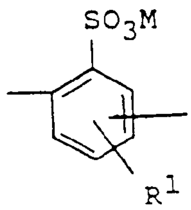

(3)

dans laquelle

M a l'une des significations indiquées ci-dessus et

$R^1$ est un hydrogène ou un alkyle de 1 à 4 atomes de carbone,

E représente un reste de formule générale (4a), (4b), (4c) ou (4d)

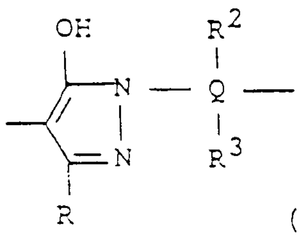

(4a)

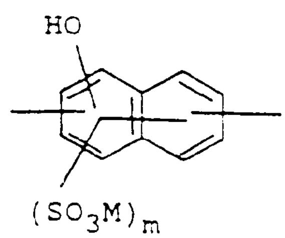

(4b)

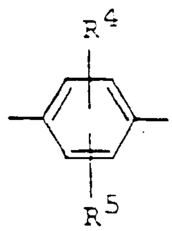

(4c)

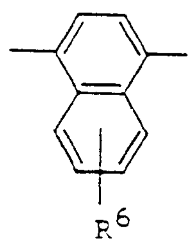

(4d)

dans lesquelles

R est un hydrogène ou un groupe alkyle de 1 à 4 atomes de carbone, cyano, carboxy, carbalcoxy de 2 à 5 atomes de carbone, carbamoyle ou phényle,

Q est un reste de benzène ou de naphtalène,

$R^2$ représente l'hydrogène ou un groupe alkyle de 1 à 4 atomes de carbone, alcoxy de 1 à 4 atomes de carbone, fluor, brome, chlore, sulfo, carboxy, carbalcoxy de 2 à 5 atomes de carbone, trifluorométhyle, carbamoyle ou N-(alkyle en $C_1$-$C_4$)-carbamoyle, lorsque Q représente un cycle benzène, ou

$R^2$ est l'hydrogène ou un groupe sulfo lorsque Q représente un cycle naphtalène,

$R^3$ est l'hydrogène ou un groupe alkyle de 1 à 4 atomes de carbone, alcoxy de 1 à 4 atomes de carbone, chlore ou sulfo, lorsque Q représente un cycle benzène, ou est l'hydrogène ou un groupe sulfo lorsque Q représente un cycle naphtalène,

$R^4$ est l'hydrogène ou un groupe alkyle de 1 à 4 atomes de carbone, alcoxy de 1 à 4 atomes de carbone, brome, chlore, trifluorométhyle, sulfo, carboxy ou cyano,

$R^5$ est l'hydrogène ou un groupe alkyle de 1 à 4 atomes de carbone, alcoxy de 1 à 4 atomes de carbone, chlore, amino, alkylamino de 1 à 4 atomes de carbone, alcanoylamino de 2 à 5 atomes de carbone, benzoylamino, uréido, N'-phényluréido, N'-(alkyl en $C_1$-$C_4$)uréido, phénylsulfonyle ou alkylsulfonyle de 1 à 4 atomes de carbone,

$R^6$ est l'hydrogène ou un groupe sulfo,

M a l'une des significations indiquées ci-dessus,

m représente le chiffre 1 ou 2,

v est le chiffre 0 ou 1, et -K-N(R°)- est un reste de formule générale (5a), (5b), (5c), (5d), (5e), (5f), (5g), (5h) ou (5i)

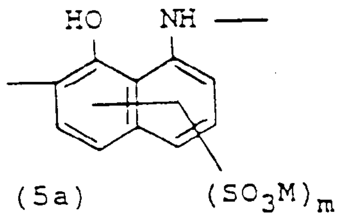

(5a)

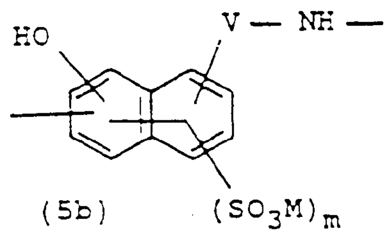

(5b)

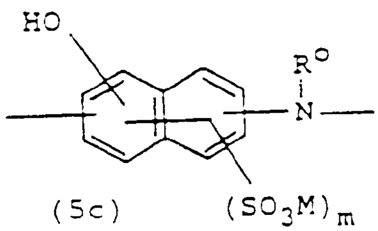

(5c)

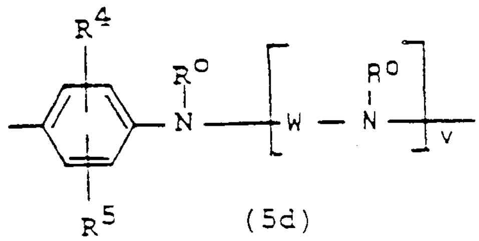

(5d)

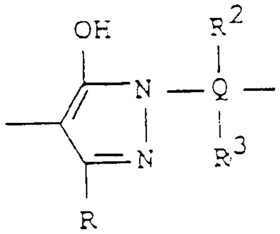

(5e)'

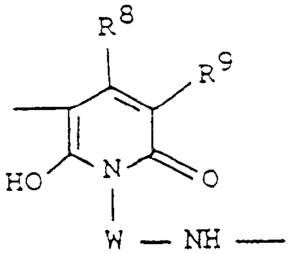

(5f)

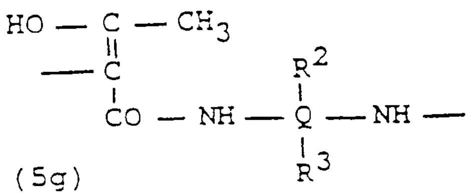

(5g)

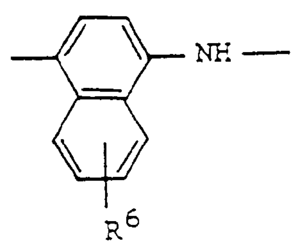

(5h)

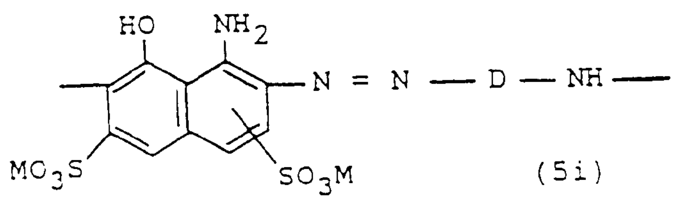

(5i)

dans lesquelles

M, m, Q, D, R, R°, $R^1$, $R^2$, $R^3$, $R^4$, $R^5$, $R^6$ et v ont les significations indiquées ci-dessus,

V est une liaison directe covalente ou un reste de formule -NH-CO-phénylène-, -NH-CO-NH-phénylène-, $-N(CH_3)$-CO-phénylène-, $-N(CH_3)$-CO-NH-phénylène- ou -NH-phénylène-,

W est un reste phénylène qui peut être substitué par 1 ou 2 substituants du groupe constitué par les groupes alkyle de 1 à 4 atomes de carbone, alcoxy de 1 à 4 atomes de carbone, chlore, carboxy et sulfo, ou est un alkylène de 1 à 6 atomes de carbone, ou est un alkylènephénylène dont

l'alkylène a 2 à 4 atomes de carbone,

$R^8$ est l'hydrogène ou un groupe alkyle de 1 à 4 atomes de carbone, alcoxy de 1 à 4 atomes de carbone, phényle ou alkyle de 1 à 4 atomes de carbone substitué par cyano, et

$R^9$ est l'hydrogène ou un groupe sulfo, sulfoalkyle de 1 à 4 atomes de carbone, cyano ou carbamoyle.

2. Composé azoïque selon la revendication 1, caractérisé en ce que R est un groupe méthyle, carboxy, carbométhoxy ou carbéthoxy.

3. Composé azoïque selon la revendication 1 ou 2, caractérisé en ce que $R^2$ est l'hydrogène ou un groupe méthoxy, éthoxy, méthyle ou chlore lorsque Q est un cycle benzène, ou l'hydrogène ou un groupe sulfo lorsque Q est un cycle naphtalène.

4. Composé azoïque selon l'une au moins des revendications 1 à 3, caractérisé en ce que $R^3$ est l'hydrogène ou un groupe méthoxy, éthoxy ou méthyle lorsque Q est un cycle benzène, ou l'hydrogène ou un groupe sulfo lorsque Q est un cycle naphtalène.

5. Composé azoïque selon la revendication 1, caractérisé en ce que $R^4$ est l'hydrogène ou un groupe chlore, méthyle, éthoxy, méthoxy ou sulfo et $R^5$ est un groupe uréido, acétylamino ou propionylamino.

6. Composé azoïque selon la revendication 1, caractérisé en ce que K° est un reste de formule générale (2B)

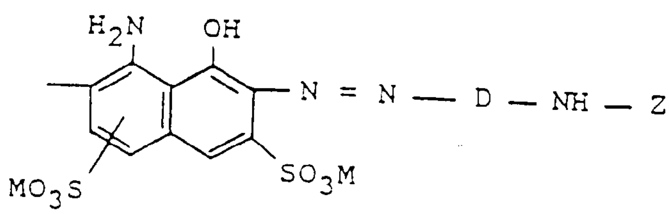

(2B)

dans laquelle M, D et Z ont les significations indiquées dans la revendication 1.

7. Composé azoïque selon la revendication 1, caractérisé en ce que K° est un reste de formule générale (9a), (9b), (9c), (9d), (9e) ou (9f)

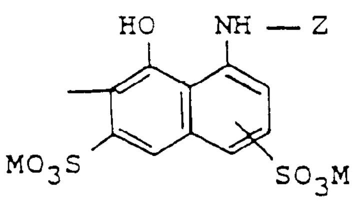

(9a)

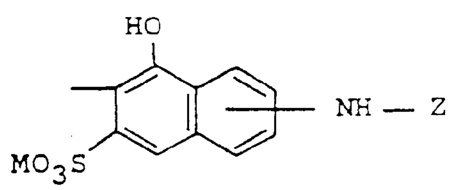

(9b)

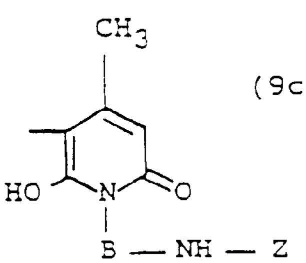

(9c)

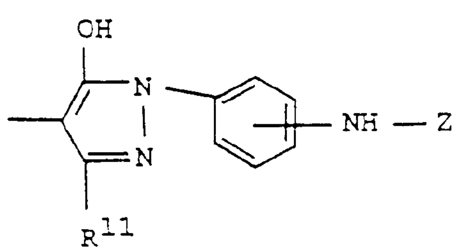

(9d)

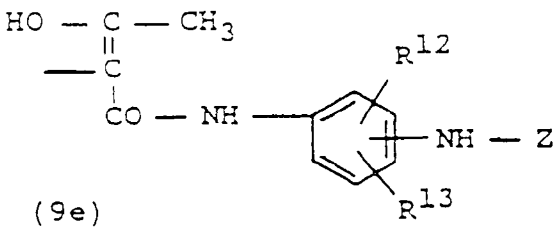

(9e)

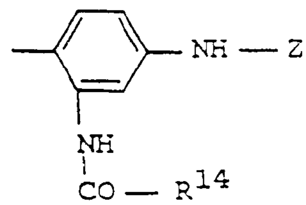

(9f)

dans lesquelles

M et Z ont les significations données ci-dessus,

B est un alkylène de 2 à 4 atomes de carbone ou un phénylène,

$R^{11}$ est un groupe carboxy, méthyle ou carbéthoxy,

$R^{12}$ est un hydrogène ou un groupe méthyle, méthoxy, sulfo ou chlore,

$R^{13}$ est un hydrogène ou un groupe méthyle ou méthoxy, et

$R^{14}$ est un groupe méthyle ou amino.

8. Composé azoïque selon la revendication 1, caractérisé en ce que K° est un reste de formule générale

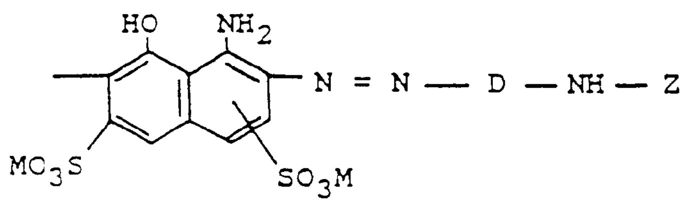

dans laquelle M, D et Z ont les significations données dans la revendication 1.

9. Composé azoïque selon l'une au moins des revendications 1 à 8, caractérisé en ce que Z est un reste de formule générale (6)

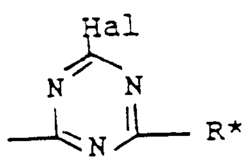

(6)

dans laquelle

Hal est un atome de chlore ou de fluor, et

R* est un groupe de formule générale (7)

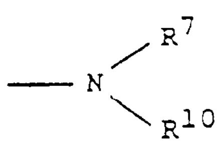

(7)

dans laquelle

$R^7$ est l'hydrogène, un groupe alkyle de 1 à 4 atomes de carbone ou un groupe alkyle de 1 à 4 atomes de carbone substitué par sulfo, carboxy, sulfato, phosphato, hydroxy, méthoxy, éthoxy, phényle, monosulfophényle ou disulfophényle,

$R^{10}$ est l'hydrogène, un groupe alkyle de 1 à 4 atomes de carbone ou un groupe alkyle de 1 à 4 atomes de carbone substitué par sulfo, carboxy, sulfato, phosphato, hydroxy, méthoxy, éthoxy, phényle, monosulfophényle ou disulfophényle, ou un cycloalkylène de 5 ou 6 atomes de carbone qui peut être substitué par 1, 2 ou 3 groupes méthyle, ou un reste

phényle qui peut être substitué par 1 ou 2 substituants du groupe constitué par les groupes méthyle, éthyle, méthoxy, éthoxy, chlore, sulfo et carboxy, ou

$R^7$ et $R^{10}$ forment ensemble avec l'atome d'azote un reste hétérocyclique de 5 ou 6 chaînons qui peut contenir un ou deux autres hétéroatomes et/ou hétérogroupes.

**10.** Composé azoïque selon la revendication 9, caractérisé en ce que $R^7$ est l'hydrogène ou un groupe méthyle ou éthyle, et $R^{10}$ est un reste phényle qui est substitué par 1 ou 2 groupes sulfo.

**11.** Composé azoïque selon la revendication 1, de formule

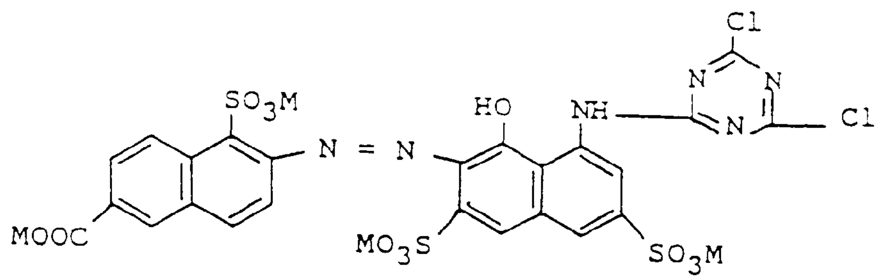

dans laquelle M a la signification donnée dans la revendication 1.

**12.** Composé azoïque selon la revendication 1, de formule

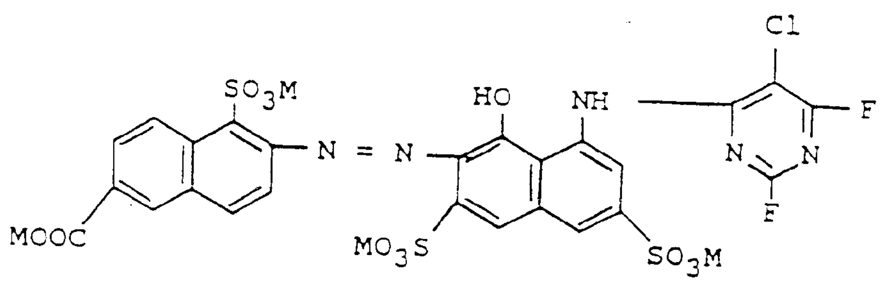

dans laquelle M a la signification donnée dans la revendication 1.

**13.** Composé azoïque selon la revendication 1, correspondant à la formule générale

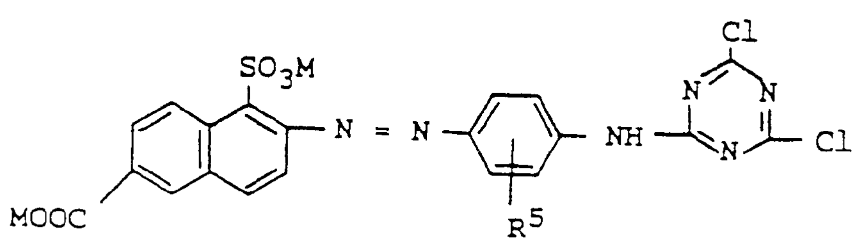

dans laquelle M a la signification donnée dans la revendication 1, et $R^5$ représente un groupe méthyle, uréido ou acétylamino.

**14.** Composé azoïque selon la revendication 1 correspondant à la formule générale (1), dans laquelle K° représente un reste de formule générale (2B) dans laquelle $R^1$ est l'hydrogène et Z représente le reste 2,4-dichloro-s-triazine-6-yle ou difluorochloropyrimidinyle.

**15.** Procédé de préparation d'un composé azoïque selon la revendication 1, caractérisé en ce que, dans le cas où K° est un reste de formule générale (2A), on effectue la copulation du composé de diazonium d'une amine de formule générale (10)

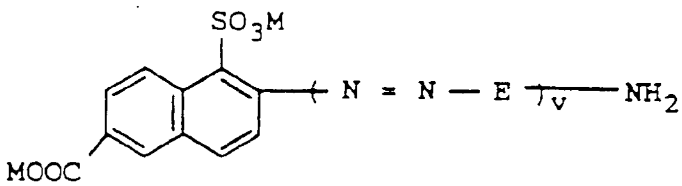

(10)

dans laquelle M, E et v ont les significations données dans la revendication 1, avec un composé de formule générale H-K-N(R°)-Z dans laquelle K, R° et Z ont la signification donnée dans la revendication 1, ou en ce que l'on fait réagir un composé de formule générale (11)

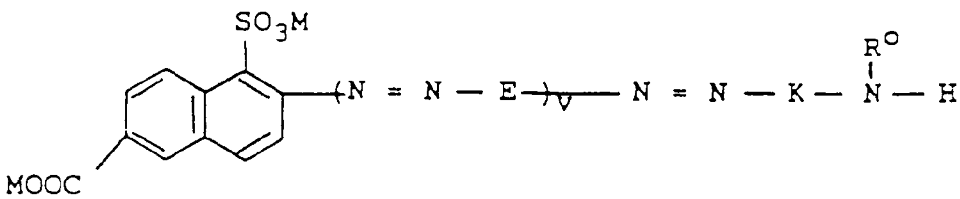

(11)

dans laquelle M, E, v, R° et K ont les significations données dans la revendication 1, avec un composé de formule générale Hal-Z dans laquelle Hal et Z ont les significations données dans la revendication 1, ou en ce que, dans le cas de la préparation d'un composé (1) qui contient comme reste Z un reste réactif sur les fibres de formule (6), on fait réagir en des quanttiés équivalentes un composé de formule générale (12) ou (16)

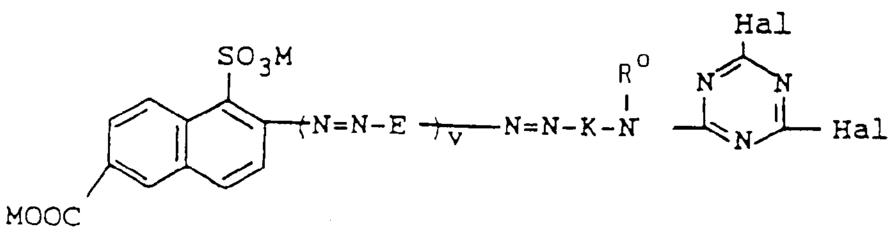

(12)

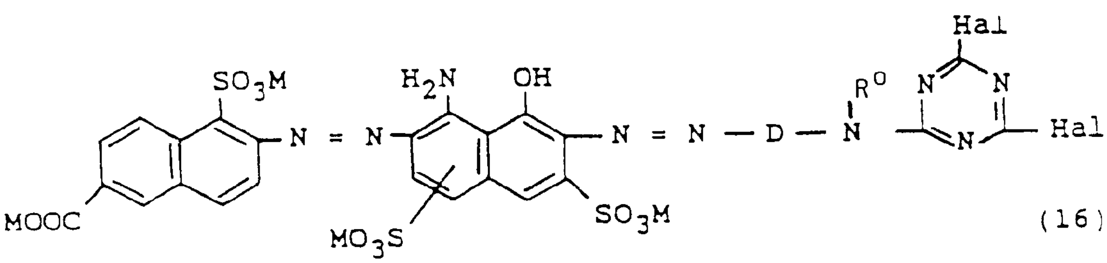

(16)

dans lesquelles D, R°, M, E, v et K ont les significations données dans la revendication 1 et Hal est tel que défini ci-dessus, les deux Hal représentant cependant de préférence le chlore, avec un composé de formule générale H-R* où R* a la signification donnée dans la revendication 1,

et en ce que, dans le cas où K° correspond à un reste de formule générale (2B), on effectue la copulation d'un composé de formule générale (13)

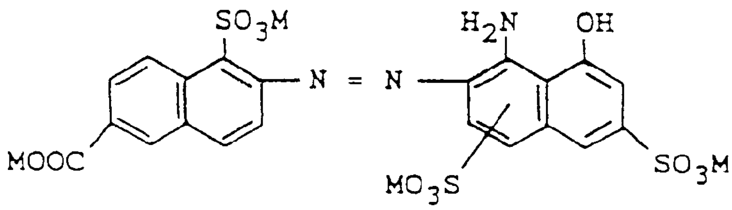

(13)

dans laquelle M a la signification donnée dans la revendication 1, avec le composé de diazonium d'une amine de formule générale (14)

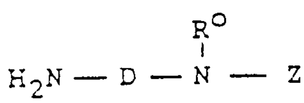

(14)

dans laquelle D et Z ont la signification donnée dans la revendication 1, ou en ce que l'on fait réagir un composé de formule générale (15)

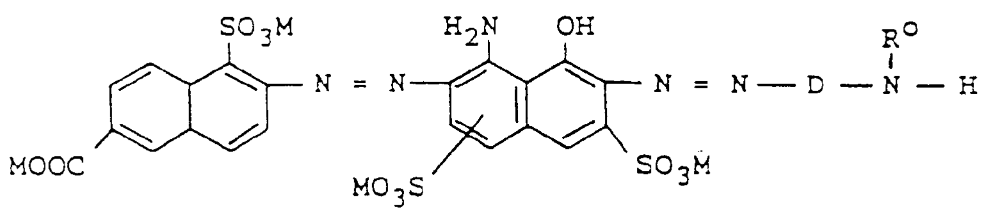

(15)

dans laquelle D, R° et M ont les significations données dans la revendication 1, avec un composé de formule générale Hal-Z dans laquelle Hal et Z ont les significations données dans la revendication 1.

**16.** Utilisation d'un composé correspondant à la formule générale (1) de la revendication 1 pour la teinture (y compris l'impression) d'une matière contenant des groupes hydroxy et/ou carboxamide, en particulier d'une matière fibreuse.

**17.** Procédé de teinture (y compris d'impression) d'une matière contenant des groupes hydroxy et/ou carboxamide, en particulier d'une matière fibreuse, selon lequel on applique un colorant sur la matière ou on l'y introduit, et on le fixe à l'aide de chaleur et/ou à l'aide d'un agent alcalin, caractérisé en ce que en ce que l'on utilise comme colorant un composé correspondant à la formule générale (1) de la revendication 1.